# EUROPEAN PATENT SPECIFICATION

(11) **EP 3 829 304 B1**
(45) Date of publication and mention of the grant of the patent: **02.10.2024**
(21) Application number: 19758515.1
(22) Date of filing: 26.07.2019
(51) Int. Cl.: A01N 31/16, A01N 59/16, A01P 3/00, A01N 65/08, A01N 65/24, A01N 25/12, A01N 25/14, C05C 9/00, C05D 9/00, C05F 11/00, C05G 3/50, C05G 3/60, C05G 3/70, C05G 5/27, A01N 25/04, A01N 25/30, A01N 65/28

(54) **AN AGROCHEMICAL COMPOSITION**
AGROCHEMISCHE ZUSAMMENSETZUNG
COMPOSITION AGROCHIMIQUE

(30) Priority: 27.07.2018 WO PCT/IB2018/055632
(43) Date of publication of application: 09.06.2021
(73) Proprietor: Sawant, Arun Vitthal, Thane, Maharashtra 421306 (IN); Doshi, Hiteshkumar Anilkant, Samata Nagar, Thane 400 606 (IN)
(72) Inventor: Sawant, Arun Vitthal, Thane, Maharashtra 421306 (IN); Doshi, Hiteshkumar Anilkant, Samata Nagar, Thane 400 606 (IN)
(74) Representative: Turner, Craig Robert
(86) International application number: PCT/IB2019/056402
(87) International publication number: WO 2020/021506

(56) References cited:
- WO-A2-00/49996
- WO-A2-2007/076125
- WO-A2-2013/188366
- JP-A- S5 517 319
- JP-A- S59 216 817
- PASQUET JULIA ET AL: "The contribution of zinc ions to the antimicrobial activity of zinc oxide", COLLOIDS AND SURFACES A : PHYSIOCHEMICAL AND ENGINEERINGS ASPECTS, ELSEVIER, AMSTERDAM, NL, vol. 457, 2 June 2014 (2014-06-02), pages 263 - 274, XP029037289, ISSN: 0927-7757, DOI: 10.1016/J.COLSURFA.2014.05.057
- S.C. BAYNE ET AL: "Zinc eugenolate crystals: SEM detection and characterization", DENTAL MATERIALS, vol. 2, no. 1, 1 February 1986 (1986-02-01), AMSTERDAM, NL, pages 1 - 5, XP055631028, ISSN: 0109-5641, DOI: 10.1016/S0109-5641(86)80061-6
- BARTELS ET AL: "The effect of zinc oxide eugenol cement on penicillin", AMERICAN JOURNAL OF ORTHODONTICS AND ORAL SURGERY, MOSBY, vol. 32, no. 6, 1 June 1946 (1946-06-01), pages A344 - A350, XP026479108, ISSN: 0096-6347, [retrieved on 19460601], DOI: 10.1016/0096-6347(46)90135-4
- CHUNMEI WANG ET AL: "Antifungal activity of eugenol against Botrytis cinerea", TROPICAL PLANT PATHOLOGY, vol. 35, no. 3, 30 June 2010 (2010-06-30), XP055631053, ISSN: 1982-5676, DOI: 10.1590/S1982-56762010000300001

## Description

### 1. FIELD OF THE INVENTION

The invention relates to an agrochemical composition comprising a complex formed with at least one zinc salt and at least one of eugenol or a source thereof; with at least one agrochemical excipient wherein the composition comprises particles in the size range of from 0.1 micron to 50 microns, wherein the composition is in the form of a solid or a liquid, wherein the solid composition is in the form of water dispersible granules, broadcast granules, water disintegrable granules, wettable powder or micro granules; and wherein the water dispersible granules, water disintegrable granules, broadcast granules are in the size range of from 0.1 to 6 mm; and the micro granules are in the size range of from 0.1 to 2.5 mm; and
wherein the liquid composition is in the form of oil dispersion or aqueous suspension; and wherein the agrochemical excipient comprises a surfactant.

The agrochemical composition is suitable for protection of plant, enhance plant growth, increase plant defense, protection of plants from biotic and abiotic stresses.

### 2. BACKGROUND OF THE INVENTION

Pesticides are commonly used in agriculture for plant protection; however, the use of synthetic pesticides is a matter of concern for both the environment and consumers in the agrochemical sector. Further to this, it has been observed that prolonged use of synthetic pesticides against certain pests and plant diseases results in development of pest resistance requiring increased dosages of pesticide for effective results and thus a major concern of pesticide residue in plant produce. Further, environmental pollution, impact on biodiversity and operational cost have created the need for developing an alternative solution which is environmentally safer and provides a residue free plant protection. It was noticed that plant derived materials are an excellent alternative to synthetic pesticides so as to reduce environmental concerns and assure safety to consumers.

The inventors of the present invention found that the agrochemical composition comprising a complex formed with a zinc salt and at least one of eugenol or a source thereof; with at least one agrochemical excipient, provides an effective control against various pests, diseases and demonstrate excellent field efficacy in terms of improved yield of crop, plant physiological parameters such as increased rooting, improved foliage, disease resistance, increased greenness of the crops thus providing a nutritionally rich crop. The composition of the present invention can be applied as a foliar spray or to the soil, seed treatment, seed painting, through broadcasting or through drip or trickle irrigation.

It was noted by the present inventors that the composition of the present invention is not only highly effective for plant protection but also has no negative impact of particular residues generally formed by the application of synthetic pesticides.

Zinc oxide eugenol is commonly used in the field of orthodentistry as dental cement filling material because of its anesthetic and antibacterial properties. These cements are also known to have other applications like providing sedative effect in deep preparations, as antimicrobial additive in paint etc.

WO/0049996 discloses use of zinc oxide coated microspheres with eugenol as a deodorant composition. EP58091972 discloses the use of eugenol or isoeugenol zinc salt as an antiulcer agent. Bartles et al. "The effect of zinc oxide eugenol cement on penicillin", American Journal of Orthodontics and Oral Surgery, Mosby, volume 32; no. 6, 1 June 1946, discloses a study examining the effect of zinc oxide eugenol cement on penicillin. Chunwei Wang et al, "Antifungal activity of eugenol against Botrytis cinerea", Tropical Plant Pathology, volume 35, no. 3, 30 June 2010 discloses a study on the activity of eugenol against ten plant pathogenic fungal species. Pasquet Julia et al, "The contribution of zinc ions to the antimicrobial activity of zinc oxide", Colloids and Surface A: Physiochemical and Engineering Aspects, Elsevier, volume 457, 2 June 204 discloses a study into the antimicrobial activity of zinc ions against various bacterial and fungal strains.

### 3. SUMMARY OF THE INVENTION:

The inventors have determined that an agrochemical composition comprising a complex wherein the complex formed with at least one zinc salt and at least one of eugenol or a source thereof; with at least one agrochemical excipient demonstrated excellent control over pests and various plant pathogens infecting crops and exhibits enhanced stability even at extended storage under higher temperatures.

Further, the agrochemical composition is in the form of solid or liquid and comprises particles in the size range of 0.1 micron to 50 microns.

Furthermore, also disclosed is a process of preparing the agrochemical composition comprising a complex formed by at least one zinc salt and at least one of eugenol or a source thereof.

The invention further relates to a method of protecting the crop, improving the crop health and growth, or enhancing crop yield.; the method comprises treating at least one of seeds, seedling, crops, a plant, plant propagation material, locus, parts thereof or to the surrounding soil with effective amount of the agrochemical composition which includes a complex formed with at least one zinc salt and at least one of eugenol or a source thereof; with at least one agrochemical excipient. It was further observed that the agrochemical composition of the present invention exhibits superior physical characteristics such as suspensibility, dispersibility, flowability, wettabilty, viscosity, pourability and stability towards heat, light, temperature, caking etc. The compositions of the present invention also demonstrated superior performance under accelerated storage conditions.

### 4. DESCRIPTION OF THE INVENTION:

In describing the embodiment of the invention, specific terminology has been chosen for the sake of clarity. Also, unless denoted otherwise percentage of components in a composition are presented as weight percent.

According to the invention, the term "complex formed with at least one zinc salt with at least one of eugenol or a source thereof' encompasses "salt" or "chelate" of the same.

A water dispersible granule is defined as a formulation which disperses or dissolves rapidly when added to water to give a fine particle suspension. As described herein, "WG" or "WDG" refer to water dispersible granules.

The term liquid suspension encompasses "aqueous suspension" or aqueous dispersion" or "suspension concentrates (SC)" or "suspoemulsion (SE)" composition. Liquid suspension can be defined as composition wherein solid particles are dispersed or suspended in a liquid. The liquid as a vehicle can be water and/or a water miscible solvent.

As defined herein, WP refers to a wettable powder, which can be a powder formulation to be applied as a suspension after dispersion in water.

As defined herein, EC refers to an emulsifiable concentrate, which can be a liquid homogenous formulation to be applied as an emulsion after dilution in water.

As defined herein, SE refers to a suspoemulsion which is a combination of suspension concentrate (SC) and concentrated aqueous emulsion (EW) technologies.

As described herein, ZC refers to a stable suspension of capsules and an active ingredient in a liquid, normally intended for dilution with water before use.

As defined herein, OD refers to oil dispersion or oil suspension wherein a solid active ingredient is dispersed in oil. The oil can vary from paraffinic to aromatic solvent types and vegetable oil or methylated seed oils.

The invention relates to an agrochemical composition comprising a complex formed with at least one zinc salt and at least one of eugenol or a source thereof; with at least one agrochemical excipient.

According to an embodiment, the complex is present in the concentration range of from 1% to 95% w/w of the total composition. According to further embodiment, the complex is present in the range of from 5% to 95% w/w of the total composition. According to further embodiment, the complex is present in the range of from 5% to 90% w/w of the total composition. According to further embodiment, the complex is present in the range of from 5% to 85% w/w of the total composition. According to further embodiment, the complex is present in the range of from 5% to 80% w/w of the total composition. According to further embodiment, the complex is present in the range of from 5% to 70% w/w of the total composition. According to further embodiment, the complex is present in the range of from 5% to 60% w/w of the total composition. According to further embodiment, the complex is present in the range of from 5% to 50% w/w of the total composition.

According to an embodiment, the zinc salt includes one or more of water soluble and/or water insoluble zinc salts and mixtures thereof.

According to an embodiment, the zinc salts particularly include water insoluble zinc salts and mixtures thereof. According to an embodiment, the water insoluble zinc salts include one or more of zinc oxide, zinc carbonate, zinc hydroxides, zinc stearate and mixtures thereof However, those skilled in the art will appreciate that it is possible to utilize other water insoluble zinc salts without departing from the scope of the invention.

According to an embodiment, the zinc salts particularly include water soluble zinc salts and mixtures thereof. According to an embodiment, the water soluble salts include one or more of zinc acetate, zinc chloride, zinc nitrate, zinc sulfate, zinc bromide, sodium zincate, zinc iodide du i votives and mixtures thereof. However, those skilled in the art will appreciate that it is possible to utilize other water soluble zinc salts without departing from the scope of the invention.

According to an embodiment, the eugenol can be either synthetically prepared or obtained from natural sources and is commercially available from a wide variety of suppliers. According to an embodiment, the source of eugenol includes one or more of essential oil or plant extract or mixtures thereof. According to a further embodiment, the essential oil or plant extract includes one or more of clove, nutmeg, cinnamon, basil, bay leaf, ginger, celery, vanilla, lemon balm, dill, japanese star anise, cinnamomum, wormwood and mixtures thereof. However, those skilled in the art will appreciate that it is possible to utilize other essential oils or plant extracts as source of eugenol without departing from the scope of the invention. The essential oils or plant extracts are commercially manufactured and easily available through various suppliers in India and abroad. The eugenol employed for the purposes of preparing the composition of the present invention has been procured from foreign vendors.

The agrochemical composition comprises the particles in the size range of 0.1 micron to 50 microns, preferably in the size range of 0.1 micron to 20 microns. The particle size range of 0.1-50 microns of the agrochemical composition was found to be important not only in terms of ease of application but also in terms of efficacy.

The agrochemical composition is in a solid form or a liquid form. The agrochemical composition may be in the form of wettable powders, water dispersible granules, broadcast granules, water disintegrable granules, or micro granules.

According to an embodiment, the agrochemical composition is in the form of solid. According to an embodiment, the agrochemical composition is in the form of water dispersible granules, broadcast granules, water disintegrable granules, microgranules and wettable powders.

According to an embodiment, the solid agrochemical composition includes a complex present in the concentration range of from 1% to 95% w/w of the total composition. According to an embodiment, the solid agrochemical composition includes a complex present in the concentration range of from 10% to 95% w/w of the total composition. According to an embodiment, the solid agrochemical composition includes a complex present in the concentration range of from 10% to 90% w/w of the total composition. According to an embodiment, the solid agrochemical composition includes a complex present in the concentration range of from 10% to 85% w/w of the total composition. According to an embodiment, the solid agrochemical composition includes a complex present in the concentration range of from 10% to 80% w/w of the total composition.

According to an embodiment, the solid agrochemical composition comprises particles in the size range of 0.1 to 50 microns, preferably in the size range of 0.1 to 20 microns.

When the agrochemical composition is in the form of water dispersible granules, broadcast granules, water disintegrable granules, wherein the granules are in the size range of 0.1- 6 mm, preferably in the size range of 0.1-5 mm, preferably in the size range of 0.1-4 mm, preferably in the size range of 0.1-3 mm, preferably in the size range of 0.1-2.5 mm.

When the agrochemical composition is in the form of micro granules, wherein the granules are in the size range of 0.1-2.5 mm, preferably in the size range of 0.1-2 mm, preferably in the size range of 0.1-1.5 mm, preferably in the size range of 0.1-1 mm, preferably in the size range of 0.1-0.5 mm.

According to an embodiment, the agrochemical composition is in the form of liquid. According to an embodiment, the agrochemical composition is in the form of aqueous suspension, or oil dispersion.

According to an embodiment, the liquid agrochemical composition includes a complex present in the concentration range of from 1% to 70% w/w of the total composition. According to an embodiment, the liquid agrochemical composition includes a complex present in the concentration range of from 5% to 70% w/w of the total composition. According to an embodiment, the liquid agrochemical composition includes a complex present in the concentration range of from 5% to 60% w/w of the total composition. According to an embodiment, the liquid agrochemical composition includes a complex present in the concentration range of from 5% to 50% w/w of the total composition.

According to an embodiment, the liquid agrochemical composition comprises particles in the size range of 0.1 to 50 microns, preferably the liquid agrochemical composition comprises particles in the size range of 0.1 to 20 microns. According to an embodiment, the agrochemical composition may optionally comprise at least one fertilizer. Application of fertilizers not only assists in increasing yield and promoting healthy crop but also helps in development of defense against the pest and disease attack.

According to another embodiment, the fertilizers include single nutrient fertilizers, multi nutrient fertilizers, binary fertilizers, compound fertilizers, organic fertilizers and mixtures thereof. However, those skilled in the art will appreciate that it is possible to utilize other fertilizers known in the art without departing from the scope of the invention.

According to yet another embodiment, the fertilizer comprises one or more of water soluble fertilizer or water insoluble fertilizer or salts or complexes and mixtures thereof.

According to further embodiment, the fertilizers include nitrogen, phosphate, potash, ammonia, ammonium nitrate, urea, sodium nitrate, potassium chloride, potassium sulfate, potassium carbonate, potassium nitrate, monoammonium phosphate, diammonium phosphate, calcium ammonium nitrate, super phosphates, phosphogypsum, triple super phosphates, sulfur fertilizers, NPK fertilizers or salts or complexes and mixtures thereof. However, those skilled in the art will appreciate that it is possible to use other fertilizers without departing from the scope of the present invention.

According to an embodiment, the fertilizer is present in the range of 1% to 90% w/w of the total composition. Preferably, the fertilizer is present in the range of 1% to 40% w/w of the total composition.

According to an embodiment, the agrochemical composition further optionally comprises one or more of nutrients, bio stimulants, pesticidal actives, plant growth regulators, microbes, bacteriospores, algae or salts or complexes and mixtures thereof. According to an embodiment, the nutrients, bio stimulants, pesticidal actives, plant growth regulators, microbes, bacteriospores, algae or salts or complexes and mixtures may be formulated separately to be included in the composition of the present invention.

According to another embodiment, the nutrients comprise one or more of macronutrients, micronutrients, in their elemental form or salts or complexes and mixtures thereof.

According to another embodiment, the nutrients comprise one or more of sulfur, iron, boron, calcium, magnesium, copper, manganese, silicon, cobalt, chlorine, sodium, molybdenum, chromium, vanadium, selenium, nickel, iodine, chlorine, fluorine, phosphorous, potassium, in their elemental form or salts or complexes and mixtures thereof. The composition may further optionally comprise of other nutrients namely one or more of vitamins, organic acids or salts or complexes and mixtures thereof. However, the above list of nutrients is exemplary and not meant to limit the scope of the invention.

According to an embodiment, the nutrients are present in the range of from 0.1% to 70% w/w of the total composition. According to an embodiment, the nutrients are present in the range of from 0.1% to 40% w/w of the total composition.

According to an embodiment, the plant growth promoters include one or more of humic acid, ascorbic acids, fulvic acid, lactic acid, oxalic acid, phytic acid, fumaric acid, gibberellic acid, auxins, citric acid, N-acetyl thiazolidine-4 carboxylic acid, paclobutrazol, triacontanol and mixtures thereof. However, the above list of plant growth promoter is exemplary and not meant to limit the scope of the invention.

According to an embodiment, the plant growth promoters are present in the range of from 0.1% to 60% w/w of the total composition. According to an embodiment, the plant growth promoters are present in the range of from 0.1% to 40% w/w of the total composition.

According to an embodiment, the pesticidal actives include one or more of an antifoulant, an insecticide, a fungicide, a herbicide, a nematicide, a pheromone, a defoliant, an acaricide, a plant growth regulator, an algicide, an antifeedant, an avicide, a bactericide, a bird repellent, a biopesticide, a biocide, a chemosterilant, a safener, an insect attractant, an insect repellent, an insect growth regulator, a mammal repellent, a mating disrupter, a disinfectant, a molluscicide, an antimicrobial, a miticide, an ovicide, a fumigant, a plant activator, a rodenticide, a synergist, a virucide, a microbial pesticide, a plant incorporated protectant, other miscellaneous pesticidal actives or salts and mixtures thereof

According to an embodiment, pesticide is present in an amount of 0.1% to 80% w/w of the composition. According to further embodiment, pesticide is present in an amount of 0.1% to 60% w/w of the composition. According to further embodiment, pesticide is present in an amount of 0.1% to 40% w/w of the composition.

According to an embodiment, the agrochemical composition comprises at least one agrochemically acceptable excipient. According to further embodiment, the agrochemically acceptable excipient comprises one or more of surfactants, dispersing agents, emulsifiers, wetting agents, binders or binding agents, disintegrating agents, fillers or carriers or diluents, spreading agents, coating agents, buffers or pH adjusters or neutralizing agents, antifoaming agents or defoamers, penetrants, preservatives, ultraviolet absorbents, UV ray scattering agents, stabilizers, pigments, colorants, structuring agents, chelating or complexing or sequestering agents, anti-settling agents, thickeners, suspending agents or suspension aid agents, viscosity modifiers, tackifiers, humectants, rheology modifiers, sticking agents, anti-freezing agent or freeze point depressants, organic fluids or oils, solvents including non aqueous solvent, aqueous solvents and mixtures thereof. However, those skilled in the art will appreciate that it is possible to utilize additional agrochemically acceptable excipients without departing from the scope of the present invention.

According to an embodiment, the agrochemical excipients are present in a concentration range of 1%-95% w/w of the total composition. According to an embodiment, the agrochemical excipients are present in a concentration range of 1%-90% w/w of the total composition. According to an embodiment, the agrochemical excipients are present in a concentration range of 1%-80% w/w of the total composition. According to an embodiment, the agrochemical excipients are present in a concentration range of 1%-70% w/w of the total composition. According to an embodiment, the agrochemical excipients are present in a concentration range of 1%-60% w/w of the total composition. According to an embodiment, the agrochemical excipients are present in a concentration range of 1%-50% w/w of the total composition. According to an embodiment, the agrochemical excipients are present in a concentration range of 1%-40% w/w of the total composition. According to an embodiment, the agrochemical excipients are present in a concentration range of 1%-30% w/w of the total composition. According to an embodiment, the agrochemical excipients are present in a concentration range of 1%-20% w/w of the total composition. According to an embodiment, the agrochemical excipients are present in a concentration range of 1%-10% w/w of the total composition.

According to an embodiment, the surfactants which are used in the agrochemical composition include one or more of anionic, cationic, non-ionic, amphoteric and polymeric surfactants. According to an embodiment, the surfactants include one or more of emulsifiers, wetting agents and dispersing agents.

The anionic surfactants include, but not limited to one or more of a salt of fatty acid, a benzoate, a polycarboxylate, a salt of alkylsulfuric acid ester, alkyl ether sulfates, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenyletherdisulfonate, a polystyrene sulfonate, a salt of alkylphosphoric acid ester, an alkylaryl phosphate, a styrylaryl phosphate, sulfonate docusates, a salt of polyoxyethylene alkyl ether sulfuric acid ester, a polyoxyethylenealkylaryl ether sulfate, alkyl sarcosinates, alpha olefin sulfonate sodium salt, alkyl benzene sulfonate or its salts, sodium lauroylsarcosinate, sulfosuccinates, polyacrylates, polyacrylates - free acid and sodium salt, salt of polyoxyethylenealkylaryl ether sulfuric acid ester, a polyoxyethylene alkyl ether phosphate, a salt of polyoxyethylenealkylaryl phosphoric acid ester, sulfosuccinates -mono and other diesters, phosphate esters, alkyl naphthalene sulfonate-isopropyl and butyl derivatives, alkyl ether sulfates -sodium and ammonium salts; alkyl aryl ether phosphates, ethylene oxides and its derivatives, a salt of polyoxyethylene aryl ether phosphoric acid ester, mono-alkyl sulphosuccinates, aromatic hydrocarbon sulphonates, 2-acrylamido-2-methylpropane sulfonic acid, ammonium lauryl sulfate, ammonium perfluorononanoate, docusate, disodium cocoamphodiacetate, magnesium laureth sulfate, perfluorobutanesulfonic acid, perfluorononanoic acid, carboxylates, perfluorooctanesulfonic acid, perfluorooctanoic acid, phospholipid, potassium lauryl sulfate, soap, soap substitute, sodium alkyl sulfate, sodium dodecyl sulfate, sodium dodecylbenzenesulfonate, sodium laurate, sodium laureth sulfate, sodium lauroylsarcosinate, sodium myreth sulfate, sodium nonanoyloxybenzenesulfonate, sodium pareth sulfate, alkyl carboxylates, sodium stearate, alpha olefin sulphonates, naphthalene sulfonate salts, alkyl naphthalene sulfonate fatty acid salts, naphthalene sulfonate condensates-sodium salt, fluoro carboxylate, fatty alcohol sulphates, alkyl naphthalene sulfonate condensates-sodium salt, a naphthalene sulfonic acid condensed with formaldehyde or a salt of alkylnaphthalene sulfonic acid condensed with formaldehyde; or salts thereof.

Cationic surfactants include, but not limited to one or more of dialkyl dimethyl ammonium chlorides, alkyl methyl ethoxylated ammonium chlorides or salts, dodecyl-, coco-, hexadecyl-, octadecyl-, octadecyl/behenyl-, behenyl-, cocoamidopropyl-,trimethyl ammonium chloride; coco-, stearyl-, bis(2-hydroxyethyl)methyl ammonium chloride, benzalkonium chloride, alkyl-, tetradecyl-, octadecyl-dimethyl benzyl ammonium chloride, dioctyl-, di(octyldecyl)-, didecyl-, dihexadecyl-distearyl-, di(hydrogenated tallow)-dimethyl ammonium chloride, di(hydrogenated tallow) benzyl-, trioctyl-, tri(octyl-decyl)-, tridodecyl-, trihexadecyl-methyl ammonium chloride, dodecyl trimethyl-, dodecyl dimethyl benzyl-, di-(octyl-decyl) dimethyl, didecyl dimethyl-ammonium bromide, quaternised amine ethoxylates, behentrimonium chloride, benzalkonium chloride, benzethonium chloride, benzododecinium bromide, bronidox, quaternary ammonium salts carbethopendecinium bromide, cetalkonium chloride, cetrimonium bromide, cetrimonium chloride, cetylpyridinium chloride, didecyldimethylammonium chloride, dimethyldioctadecylammonium bromide, dimethyldioctadecyl ammonium chloride, domiphen bromide, lauryl methyl gluceth-10 hydroxypropyldimonium chloride, octenidinedihydrochloride, olaflur, n-oleyl-1, 3-propanediamine, pahutoxin, stearalkonium chloride, tetramethylammonium hydroxide, thonzonium bromide; or salts thereof.

The non-ionic surfactants include, but not limited to one or more of polyol esters, polyol fatty acid esters, polyethoxylated esters, polyethoxylated alcohols, ethoxylated and propoxylated fatty alcohols, ethoxylated and propoxylated alcohols, EO/PO copolymers; EO and PO block copolymers, di, tri-block copolymers; block copolymers of polyethylene glycol and polypropylene glycol, poloxamers, polysorbates, alkyl polysaccharides such as alkyl polyglycosides and blends thereof, amine ethoxylates, sorbitan fatty acid ester, glycol and glycerol esters, glucosidyl alkyl ethers, sodium tallowate, polyoxyethylene glycol, sorbitan alkyl esters, sorbitan derivatives, fatty acid esters of sorbitan (Spans) and their ethoxylated derivatives (Tweens), and sucrose esters of fatty acids, cetostearyl alcohol, cetyl alcohol, cocamide dea, cocamide mea, decyl glucoside, decylpolyglucose, glycerol monostearate, lauryl glucoside, maltosides, monolaurin, narrow-range ethoxylate, nonidet p-40, nonoxynol-9, nonoxynols, octaethylene glycol monododecyl ether, n-octyl beta-d-thioglucopyranoside, octyl glucoside, oleyl alcohol, PEG-10 sunflower glycerides, pentaethylene glycol monododecyl ether, polidocanol, poloxamer, poloxamer 407, polyethoxylated tallow amine, polyglycerol polyricinoleate, polysorbate, polysorbate 20, polysorbate 80, sorbitan, sorbitan monolaurate, sorbitanmonostearate, sorbitantristearate, stearyl alcohol, surfactin, glyceryl laureate, lauryl glucoside, nonylphenolpolyethoxyethanols, nonyl phenol polyglycol ether, castor oil ethoxylate, polyglycol ethers, polyadducts of ethylene oxide and propylene oxide, block copolymer of polyalkylene glycol ether and hydroxystearic acid, tributylphenoxypolyethoxy ethanol, octylphenoxypolyethoxy ethanol, etho-propoxylatedtristyrlphenols, ethoxylated alcohols, polyoxy ethylene sorbitan, fatty acid polyglyceride, a fatty acid alcohol polyglycol ether, acetylene glycol, acetylene alcohol, an oxyalkylene block polymer, a polyoxyethylene alkyl ether, a polyoxyethylenealkylaryl ether, a polyoxyethylenestyrylaryl ether, a polyoxyethylene glycol alkyl ether, polyethylene glycol, a polyoxyethylene fatty acid ester, a polyoxyethylenesorbitan fatty acid ester, a polyoxyethylene glycerin fatty acid ester, Alcohol ethoxylates - C6 to C16/18 alcohols, linear and branched, Alcohol alkoxylates - various hydrophobes and EO/PO contents and ratios, Fatty acid esters - mono and diesters; lauric, stearic and oleic; glycerol esters - with and without EO; lauric, stearic, cocoa and tall oil derived, ethoxylatedglycerine, sorbitan esters - with and without EO; lauric, stearic and oleic based; mono and trimesters, castor oil ethoxylates - 5 to 200 moles EO; non-hydrogenated and hydrogenated, block polymers, amine oxides- ethoxylated and non-ethoxylated; alkyl dimethyl, Fatty amine ethoxylates-coco, tallow, stearyl, oleyl amines, a polyoxyethylene hydrogenated castor oil or a polyoxypropylene fatty acid ester; or salts thereof. Amphoteric or Zwitterionic surfactants include, but not limited one or more of to betaine, coco and lauryl amidopropyl betaines, coco alkyl dimethyl amine oxides, alkyl dimethyl betaines; c8 to c18, alkyl dipropionates -sodium lauriminodipropionate, cocoamidopropylhydroxysulfobetaine, imidazolines, phospholipids phosphatidylserine, phosphatidylethanolamine, phosphatidylcholine, and sphingomyelins, lauryl dimethylamine oxide, alkyl amphoacetates and proprionates, alkyl ampho(di)acetates, and diproprionates, lecithin and ethanolamine fatty amides; or salts thereof.

Surfactants that are commercially available under the trademark but are not limited to, one or more of Atlas G5000, TERMUL 5429, TERMUL 2510, ECOTERIC^{®}, EULSOGEN^{®} 118, Genapol^{®}X, Genapol^{®}OX -080, Genapol^{®} C 100, Emulsogen ^{®} EL 200, ArlacelP135, Hypermer 8261, HypermerB239, Hypermer B261, Hypermer B246sf, Solutol HS 15, Promulgen^{™} D, Soprophor 7961P, Soprophor TSP/461, Soprophor TSP/724, Croduret 40, Etocas 200, Etocas 29, Rokacet R26, Cetomacrogol 1000, CHEMONIC OE-20, Triton N-101, Triton X-100, Tween 20, 40, 60, 65, 80, Span 20, 40, 60, 80, 83, 85, 120, Brij^{®}, Atlox 4912, Atlas G5000, TERMUL 3512, TERMUL 3015, TERMUL 5429, TERMUL 2510, ECOTERIC^{®}, ECOTERIC^{®} T85, ECOTERIC^{®} T20, TERIC 12A4, EULSOGEN^{®} 118, Genapol^{®}X, Genapol^{®}OX -080, Genapol^{®} C 100, Emulsogen ^{®} EL 200, ArlacelP135, Hypermer 8261, HypermerB239, Hypermer B261, Hypermer B246sf, Solutol HS 15, Promulgen^{™} D, Soprophor 7961P, Soprophor TSP/461, Soprophor TSP/724, Croduret 40, Etocas 200, Etocas 29, Rokacet R26, CHEMONIC OE-20, Triton^{™} N-101, IGEPAL CA-630 and Isoceteth-20. However, those skilled in the art will appreciate that it is possible to utilize other conventionally known surfactants without departing from the scope of the present invention.

According to an embodiment, the surfactant is present in an amount of 0.1% to 60% w/w of the total composition. According to an embodiment, the surfactant is present in an amount of 0.1% to 40% w/w of the total composition. According to an embodiment; the surfactant is present in an amount of 0.1% to 30% w/w of the total composition. According to a further embodiment, the surfactant is present in an amount of 0.1% to 20% w/w of the total composition. According to an embodiment, the surfactant is present in an amount of 0.1% to 10% w/w of the total composition.

According to an embodiment, the solvents used in the agrochemical composition include water miscible solvents. The water miscible solvents include, but not limited to one or more of 1, 4-dioxane, ethylene glycol, glycerol, n-methyl-2-pyrrolidone, 1,3-propanediol, 1,5-pentanediol, sorbitol, propylene glycol, triethylene glycol, 1,2-butanediol, 1,3-butanediol, 1,4-butanediol, dimethylformamide, dimethoxyethane, dimethyloctanamide, dimethyldecanamide. However, those skilled in the art will appreciate that it is possible to utilize other water miscible solvents without departing from the scope of the present invention.

According to an embodiment, the solvent is present in an amount of 0.1-95% w/w of the total composition. According to an embodiment, the solvent is present in an amount of 0.1-60% w/w of the total composition. According to an embodiment, the solvent is present in an amount of 0.1-40% w/w of the total composition. According to an embodiment, the solvent is present in an amount of 0. 1-30% w/w of the total composition.

According to an embodiment, the disintegrating agents which are used in the agrochemical composition include, but not limited to one or more of inorganic water soluble salts e.g. sodium chloride, nitrate salts; water soluble organic compounds such as agar, hydroxypropyl starch, carboxymethyl starch ether, tragacanth, gelatin, casein, microcrystalline cellulose, cross-linked sodium carboxymethyl cellulose, carboxymethyl cellulose, carboxymethyl cellulose calcium, sodium tripolyphosphate, sodium hexametaphosphate, metal stearates, a cellulose powder, dextrin, methacrylate copolymer, Polyplasdone^{®} XL-10 (crosslinked polyvinylpyrrolidone), poly(vinylpyrrolidone), polyaminocarboxylic acid, sulfonated styrene-isobutylene-maleic anhydride copolymer, salts of polyacrylates of methacrylates, starch-polyacrylonitrile graft copolymer, sodium or potassium bicarbonates/ carbonates or their mixtures or salts with acids such as citric and fumaric acid; or salts thereof. However, those skilled in the art will appreciate that it is possible to utilize different disintegrating agents without departing from the scope of the present invention.

According to an embodiment, the disintegrating agent is present in an amount of 0.1% to 50% w/w of the composition. According to an embodiment, the disintegrating agent is present in an amount of 0.1% to 30% w/w of the composition. According to an embodiment, the disintegrating agent is present in an amount of 0.1% to 20% w/w of the composition. According to an embodiment, the disintegrating agent is present in an amount of 0.1% to 10% w/w of the composition. According to an embodiment, the disintegrating agent is present in an amount of 0.1% to 5% w/w of the composition.

According to an embodiment, the binding agents or binders which are used in the agrochemical composition include, but not limited to one or more of proteins, lipoproteins, lipids, glycolipid, glycoprotein, carbohydrates such as monosaccharides, disaccharides, oligosaccharides and polysaccharides, complex organic substance, synthetic organic polymers or derivatives and combinations thereof. However, those skilled in the art will appreciate that it is possible to utilize different binding agents without departing from the scope of the present invention. According to an embodiment, the binding agent is present in an amount of 0.1% to 50% w/w of the composition. According to further embodiment, the binding agent is present in an amount of 0.1% to 30% w/w of the composition. According to further embodiment, the binding agent is present in an amount of 0.1% to 20% w/w of the composition. According to further embodiment, the binding agent is present in an amount of 0.1% to 10% w/w of the composition.

According to an embodiment, the carriers which are used in the agrochemical composition include, but not limited to one or more of solid carriers or fillers or diluents. According to another embodiment, the carriers include mineral carriers, plant carriers, synthetic carriers, water-soluble carriers. However, those skilled in the art will appreciate that it is possible to utilize different carriers without departing from the scope of the present invention.

The solid carriers include natural minerals like clay such as china clay, acid clay, kaolin such as kaolinite, dickite, nacrite, and halloysite, serpentines such as chrysotile, lizardite, antigorite and amesite, synthetic and diatomaceous silicas, montmorillonite minerals such as sodium montmorillonite, smectites, such as saponite, hectorite, sauconite, and hyderite, micas, such as pyrophyllite, talc, agalmatolite, muscovite, phengite, sericite, and illite, silicas such as cristobalite and quartz including attapulgite and sepiolite; vermiculite, laponite, pumice, bauxite, hydrated aluminas, perlite, sodium bicarbonate, volclay, vermiculites, limestone, natural and synthetic silicates, charcoal, silicas, wet process silicas, dry process silicas, calcined products of wet process silicas, surface-modified silicas, mica, zeolite, diatomaceous earth, derivatives thereof; chalks (Omya ^{®}), fuller's earth, loess, mirabilite, white carbon, slaked lime, synthetic silicic acid, starch, modified starch (Pineflow, available from Matsutani Chemical industry Co., Ltd.), cellulose, plant carriers such as cellulose, chaff, wheat flour, wood flour, starch, rice bran, wheat bran and soyabean flour, tobacco powder, a vegetable powder polyethylene, polypropylene, poly(vinylidene chloride), methyl cellulose, hydroxypropyl cellulose, hydroxypropyl methylcellulose, sodium carboxymethyl cellulose, propylene glycol alginate, polyvinylpyrrolidone, carboxyvinyl polymer, casein sodium, sucrose, salt cake, potassium pyrophosphate, sodium tripolyphosphate, maleic acid, fumaric acid and malic acid and mixtures thereof Commercially available silicates are Aerosil brands, Sipemat brands as Sipernat ^{®} 50S and CALFLO E, and kaolin 1777. However, those skilled in the art will appreciate that it is possible to utilize different solid carriers without departing from the scope of the present invention.

According to an embodiment, the carrier is present in an amount of 0.1% to 98% w/w of the composition. According to further embodiment, the carrier is present in an amount of 0.1% to 80% w/w of the composition. According to further embodiment, the carrier is present in an amount of 0.1% to 60% w/w of the composition. According to further embodiment, the carrier is present in an amount of 0.1% to 40% w/w of the composition. According to further embodiment, the carrier is present in an amount of 0.1% to 20% w/w of the composition. According to an embodiment, the anti-caking agents which are used in the agrochemical composition include, but not limited to one or more of polysaccharides such as starch, alginic acid, mannose, galactose; poly(vinylpyrrolidone), fumed silica (white carbon), ester gum, a petroleum resin, Foammaster^{®} Soap L sodium stearate, Brij^{®} 700 polyoxyethylene (100) stearylether, Aerosol^{®} OT-B sodium dioctyl sulfosuccinate, Silwet^{®} L-77 silicone-polyether copolymer, sodium acetate, sodium metasilicate, sodium alkylsulfosuccinates, sodium carbonate or bicarbonate, salts thereof However, those skilled in the art will appreciate that it is possible to utilize different anti caking agents without departing from the scope of the present invention. According to an embodiment, the anti-caking agent is present in an amount of 0.1% to 30% w/w of the total composition. According to an embodiment, the anti-caking agent is present in an amount of 0.1% to 20% w/w of the total composition. According to an embodiment, the anti-caking agent is present in an amount of 0.1% to 10% w/w of the total composition. According to an embodiment, the anti-caking agent is present in an amount of 0.1% to 5% w/w of the total composition. According to an embodiment, the antifoaming agents or defoamers which are used in the agrochemical composition include, but not limited to one or more of silica, siloxane, silicone dioxide, polydimethyl siloxane, alkyl polyacrylates, ethylene oxide/propylene oxide copolymers, polyethylene glycol, Silicone oils and magnesium stearate or derivatives thereof. Preferred antifoaming agents include silicone emulsions (such as, e.g., Silikon^{®} SRE, Wacker or Rhodorsil^{®} from Rhodia), long-chain alcohols, fatty acids, fluoroorganic compounds. However, those skilled in the art will appreciate that it is possible to utilize other conventionally known antifoaming agents without departing from the scope of the present invention.

According to an embodiment, the anti-foaming agent is present in an amount of 0.01% to 20% w/w of the total composition. According to an embodiment, the anti-foaming agent is present in an amount of 0.01% to 10% w/w of the total composition. According to an embodiment, the anti-foaming agent is present in an amount of 0.01% to 5% w/w of the total composition. According to an embodiment, the anti-foaming agent is present in an amount of 0.01% to 1% w/w of the total composition.

According to an embodiment, the pH-adjusters or buffers or neutralizing agents which are used in the agrochemical composition include both acids and bases of the organic or inorganic type and mixtures thereof. According to further embodiment, pH-adjusters or buffers or neutralizing agents include, but not limited to one or more of organic acids, inorganic acids and alkali metal compounds or salts thereof. According to an embodiment, the organic acids include, but not limited to one or more of citric, malic, adipic, fumaric, maleic, succinic, and tartaric acid or salts thereof; and the mono-, di-, or tribasic salts of these acids.

Alkali metal compounds include but not limited to, one or more of hydroxides of alkali metals such as sodium hydroxide and potassium hydroxide, carbonates of alkali metals such as sodium carbonate, hydrogencarbonates of alkali metals such as sodium hydrogencarbonate and alkali metal phosphates such as sodium phosphate and mixtures thereof. According to an embodiment, the salts of inorganic acids include but not limited to, one or more of alkali metal salts such as lithium chloride, sodium chloride, potassium chloride, lithium nitrate, sodium nitrate, potassium nitrate, lithium sulfate, sodium sulfate, potassium sulfate, sodium monohydrogen phosphate, potassium monohydrogen phosphate, sodium dihydrogen phosphate, and potassium dihydrogen phosphate. Mixtures can also be used to create a pH-adjusters or buffers or neutralizing agents. However, those skilled in the art will appreciate that it is possible to utilize other conventionally known pH-adjusters or buffers or neutralizing agents without departing from the scope of the present invention.

According to an embodiment, the pH-adjuster or buffer is present in an amount of 0.01% to 20% w/w of the total composition. According to an embodiment, the pH-adjuster or buffer is present in an amount of 0.01% to 10% w/w of the total composition. According to an embodiment, the pH-adjuster or buffer is present in an amount of 0.01% to 5% w/w of the total composition. According to an embodiment, the pH-adjuster or buffer is present in an amount of 0.01% to 1% w/w of the total composition.

According to an embodiment, the spreading agents which are used in the agrochemical composition include, but not limited to one or more of cellulose powder, dextrin, modified starch, crosslinked polyvinylpyrrolidone), a copolymer of maleic acid with a styrene compound, a (meth)acrylic acid copolymer, a half ester of a polymer consisting of polyhydric alcohol with dicarboxylic anhydride, a water-soluble salt of polystyrenesulfonic acid, fatty acids, latex, aliphatic alcohols, vegetable oils such as cottonseed, or inorganic oils, petroleum distillates, modified trisiloxanes, polyglycol, polyethers, clatharates or salts thereof However, those skilled in the art will appreciate that it is possible to utilize other conventionally known spreading agents without departing from the scope of the present invention.

According to an embodiment, the spreading agent is present in an amount of 0.1% to 20% w/w of the total composition. According to an embodiment, the spreading agent is present in an amount of 0.1% to 10% w/w of the total composition. According to an embodiment, the spreading agent is present in an amount of 0.1% to 5% w/w of the total composition. According to an embodiment, the spreading agent is present in an amount of 0.1% to 1% w/w of the total composition.

According to an embodiment, the sticking agents which are used in the agrochemical composition include, but not limited to one or more of paraffin, a polyamide resin, polyacrylate, polyoxyethylene, wax, polyvinyl alkyl ether, alkylphenol-formalin condensate, fatty acids, latex, aliphatic alcohols, vegetable oils such as cottonseed, or inorganic oils, petroleum distillates, modified trisiloxanes, polyglycol, polyethers, clatharates, a synthetic resin emulsion or salts thereof. However, those skilled in the art will appreciate that it is possible to utilize other conventionally known sticking agents without departing from the scope of the present invention.

According to an embodiment, the sticking agent is present in an amount of 0.1% to 30% w/w of the total composition. According to an embodiment, the sticking agent is present in an amount of 0.1% to 20% w/w of the total composition. According to an embodiment, the sticking agent is present in an amount of 0.1% to 10% w/w of the total composition.

According to an embodiment, the stabilizers which are used in the agrochemical composition include, but not limited to one or more of peroxide compounds such as hydrogen peroxide and organic peroxides, alkyl nitrites such as ethyl nitrite and alkyl glyoxylates such as ethyl glyoxylate, zeolite, antioxidants such as phenol compounds, phosphoric acid compounds and the like; ultraviolet absorbers such as benzophenone compounds. However, those skilled in the art will appreciate that it is possible to utilize other conventionally known stabilizers without departing from the scope of the present invention.

According to an embodiment, the stabilizer is present in an amount of 0.1% to 30% w/w of the total composition. According to an embodiment, the stabilizer is present in an amount of 0.1% to 20% w/w of the total composition. According to an embodiment, the stabilizer is present in an amount of 0.1% to 10% w/w of the total composition.

According to an embodiment, the preservatives which are used in the agrochemical composition include, but not limited to one or more of bactericides, anti-fungal agents, biocides, anti-microbial agents, and antioxidant. Non limiting examples of preservatives include one or more of paraben, its esters and salts, propionic acid and its salts, 2,4-hexadienoic acid (sorbic acid) and its salt, formaldehyde and paraformaldehyde, 2-hydroxybiphenyl ether and its salts, inorganic sulfites and bisulfites, sodium iodate, chlorobutanol, dehydraacetic acid, formic acid, 1,6-bis(4-amidino-2-bromophenoxy)-n-hexane and its salts, 5-amino-1,3-bis(2-ethylhexyl)-5-methylhexahydropyrimidine, 5-bromo-5-nitro-1,3-dioxane, 2-bromo-2-nitropropane-1,3-diol, 2,4-dichlorobenzyl alcohol, N-(4-chlorophenyl)-N'-(3,4-dichlorophenyl) urea, 4-chloro-m-cresol, 2,4,4'-trichloro-2'-hydroxy diphenyl ether, 4-chloro-3,5-dimethyl phenol, 1,1'-methylene-bis(3-(1-hydroxy methyl-2,4-dioximidazolidin-5-yl)urea), poly(hexamethylenediguanide) hydrochloride, 2-phenoxyethanol, hexamethylenetetramine, 1-(3-chloroallyl)-3,5,7-triaza-1-azonia-adamantane chloride, 1(4-chlorophenoxy)-1-(1H-imidazol-1-yl)-3,3-dimethyl-2-butanone, 1,3-bis(hydroxymethyl)-5,5-dimethyl-2,4-imidazolidinedione, benzyl alcohol, octopirox, 1,2-dibromo-2,4-dicyanobutane, 2,2'-methylenebis(6-bromo-4-chlorophenol), bromochlorophene, dichlorophene, 2-benzyl-4-chlorophenol, 2-chloroacetamide, chlorhexidine, chlorhexidine acetate, chlorhexidine gluconate, chlorhexidine hydrochloride, 1-phenoxypropan-2-ol, N-alkyl(C12-C22)trimethylammonium bromide and chloride, 4,4-dimethyl-1,3-oxazolidine, N-hydroxymethyl-N-(1,3-di(hydroxymethyl)-2,5-dioxoimidazolidin-4-yl)-N'-hydroxymethylurea, 1,6-bis(4-amidinophenoxy)-n-hexane and its salts, glutaraldehyde, 5-ethyl-1-aza-3,7-dioxabicyclo(3.3.0)octane, 3-(4-chlorophenoxy)propane-1,2-diol, Hyamine, alkyl(C8-C18)dimethylbenzyl ammonium chloride, alkyl(C8-C18)dimethylbenzylammonium bromide, alkyl(C8-C18)dimethylbenzylammonium saccharinate, benzyl hemiformal, 3-iodo-2-propynyl butylcarbamate, sodium hydroxymethylaminoacetate, cetyltrimethylammonium bromide, cetylpyridinium chloride, and derivatives of 2H isothiazol-3-one (so-called isothiazolone derivatives) such as alkylisothiazolones (for example 2-methyl-2H-isothiazol-3-one, MIT; chloro-2-methyl-2H-isothiazol-3-one, CIT), benzoisothiazolones (for example 1,2-benzoisothiazol-3(2H)-one, BIT, commercially available as Proxel^{®} types from ICI) or 2-methyl-4,5-trimethylene-2H-isothiazol-3-one (MTIT), C1-C4-alkyl para-hydroxybenzoate, an dichlorophene, Proxel^{®} from ICI or Acticide^{®} RS from Thor Chemie and Kathon^{®} MK from Rohm & Haas, Bacto-100, thimerosal, Sodium Propinoate, Sodium Benzoate, Propyl Paraben,Propyl Paraben Sodum, Potassium Sorbate, Potassium Benzoate, Phenyl Mercuric Nitrate, Phenyl Etehyl Alcohol, Sodium, Ethylparaben, Methylparaben, Butylparaben, Bezyla Alcohol, Benzothonium Chloride, Cetylpyridinium Chloride, Benzalkonium Chloride, 1,2-benzothiazol-3-one, Preventol^{®} (Lanxess^{®}), Butylhydroxytoluene, potassium sorbate, iodine-containing organic compounds such as 3-bromo-2,3-diiodo-2-propenyl ethyl carbonate, 3-iodo-2-propynyl butyl carbamate, 2,3,3-triiodo allyl alcohol, and parachlorophenyl-3-iodopropargylformal; benzimidazole compounds and benzthiazole compounds such as 2-(4-thiazolyl)benzimidazole and 2-thiocyanomethylthiobenzo-thiazole; triazole compounds such as 1-(2-(2',4'-dichlorophenyl)-1,3-dioxolane-2-ylmethyl)-1H-1,2,4-triazole, 1-(2-(2',4'-dichloro phenyl)-4-propyl-1,3-dioxolane-2-ylmethyl)-1H-1,2,4-triazole, and α-(2-(4-chlorophenyl) ethyl)-α-(1,1-dimethyl ethyl)-1H-1,2,4-triazole-1-ethanol; and naturally occurring compounds such as 4-isopropyl tropolone (hinokitiol) and boraxor salts thereof. Antioxidants includes but not limited to one or more of imidazole, urcanic acid, 4,4'-thiobis-6-t-butyl-3-methylphenol, 2,6-di-t-butyl-p-cresol (BHT), and pentaerythrityltetrakis[3-(3,5,-di-t-butyl-4-hydroxyphenyl)]propionate; amine antioxidants such as N,N'-di-2-naphthyl-p-phenylenediamine; hydroquinoline antioxidants such as 2,5-di(t-amyl)hydroquinoline; phosphorus-containing antioxidants such as triphenyl phosphate, carotenoids, carotenes (e.g. α-carotene, β-carotene, lycopene), lipoic acid, dihydrolipoic acid, aurothioglucose, propylthiouracil and further thio compounds (e.g. thioglycerol, thiosorbitol, thioglycolic acid, thioredoxin, N-acetyl, methyl, ethyl, propyl, amyl, butyl, lauryl, palmitoyl, oleyl, γ-linoleyl, cholesteryl and glyceryl esters thereof), and salts thereof, dilaurylthiodipropionate, distearylthiodipropionate, thiodipropionic acid and pesters, ethers, lipids, nucleotides, nucleosides and salts thereof, and sulfoximine compounds (e.g. buthioninesulfoximines, homocysteine sulfoximine, buthionine sulfones, penta-, hexa-, heptathioninesulfoximine) in very low tolerated doses (e.g. pmol/kg to pmol/kg), α-hydroxy acids (e.g. citric acid, lactic acid, malic acid), humic acids, gallic esters (e.g. propyl, octyl and dodecyl gallate), unsaturated fatty acids, hydroquinone, arbutin, ubiquinone and ubiquinol, ascorbyl palmitate, stearate, di- palmitate, acetate, Mg ascorbyl phosphates, diso- diumascorbyl phosphate and sulfate, potassium ascorbyltocopheryl phosphate, isoascorbic acid, the coniferyl benzoate of benzoin resin, rutin, rutinic acid, disodium rutinyldisulfate, dibutylhydroxytoluene, 4,4-thiobis-6-tert-butyl-3-methylphenol, butylhydroxy anisole, p-octylphenol, mono-(di- or tri-) methyl benzylphenol, 2,6-tert-butyl-4-methylphenol, pentaerythritol-tetrakis 3-(3,5-di-tert-butyl-4-hydroxyphenyl)propionate, butylhydroxyanisol, nordihydroguaiacic acid, nordihydroguaiaretic acid, trihydroxybutyrophenone, uric acid, mannose, selenium, selenomethionine, stilbene, stilbene oxide, trans-stilbene oxide, and mixtures thereof. However, those skilled in the art will appreciate that it is possible to utilize other conventionally known preservatives without departing from the scope of the present invention.

According to an embodiment, the preservative or bactericide or anti-fungal agent or biocide or anti-microbial agent or antioxidant is present in an amount of 0.1% to 20% w/w of the total composition. According to further embodiment, the preservative or bactericide or anti-fungal agent or biocide or anti-microbial agent or antioxidant is present in an amount of 0.1% to 10% w/w of the total composition. According to further embodiment, the preservative or bactericide or anti-fungal agent or biocide or anti-microbial agent or antioxidant is present in an amount of 0.1% to 5% w/w of the total composition. According to further embodiment, the preservative or bactericide or anti-fungal agent or biocide or anti-microbial agent or antioxidant is present in an amount of 0.1% to 1% w/w of the total composition.

According to an embodiment, the structuring agents which are used in the liquid composition include, but not limited to one or more of thickeners, viscosity modifiers, tackifiers, suspension aids, rheological modifiers or anti-settling agents. A structuring agent prevents sedimentation of the active ingredient particles after prolonged storage.

According to an embodiment, the structuring agents which are used in the liquid composition include, but not limited to one or more polymers such as polyacrylics, polyacrylamides, polysaccharides, hydrophobically modified cellulose derivatives, co-polymers of cellulose derivatives, carboxyvinyl or polyvinyl pyrrolidones, polyethylenes, polyethylene oxide, polyvinyl alcohol and derivatives; clays such as bentonite clays, kaolin, smectite, attapulgites, attaclays with high surface area silica and natural gums such as guar gum, xanthan gum, gum Arabic, gum tragacanth, rhamsan gum, locust bean gum, carageenan, welan gum, veegum, gelatin, collagen; polyacrylic acids and their sodium salts; the polyglycol ethers of fatty alcohols and polyethylene oxide or polypropylene oxide condensation products and mixtures thereof and include ethoxylated alkyl phenols (also designated in the art as alkylaryl polyether alcohols); ethoxylated aliphatic alcohols (or alkyl polyether alcohols); ethoxylated fatty acids (or polyoxyethylene fatty acid esters); ethoxylatedanhydrosorbitol esters (or polyethylene sorbitan fatty acid esters), long chain amine and cyclic amine oxides which are nonionic in basic solutions; long chain tertiary phosphine oxides; and long chain dialkyl sulfoxides, fumed silica, mixture of fumed silica and fumed aluminium oxide, swellable polymers, polyamides; polyols such as glycerine, poly(vinyl acetate), sodium polyacrylate, polyethylene glycol), phospholipid (for example, cephalin, and the like); stachyose, fructo-oligosaccharides, amylose, pectins, alginates, hydrocolloids and mixtures thereof. Also, celluloses such as hemicellulose, carboxymethylcellulose, ethylcellulose, hydroxyethylcellulose, hydroxy-methyl ethyl cellulose, hydroxyl ethyl propyl cellulose, methylhydroxyethylcellulose, methylcellulose; starches such, starch acetates, starch hydroxyethyl ethers, ionic starches, long-chain alkyl starches, dextrins, maltodextrin, corn starch, amine starches, phosphates starches, and dialdehyde starches; plant starches such as corn starch and potato starch; other carbohydrates such as pectin, dextrin, amylopectin, xylan, glycogen, agar, gluten, alginic acid, phycocolloids, or chitin. However, those skilled in the art will appreciate that it is possible to utilize other conventionally known structuring agents without departing from the scope of the present invention.

Preferred structuring agents include one or more of xanthan gum, aluminum silicate, methylcellulose, polysaccharide, alkaline earth metal silicate, gelatin, and polyvinyl alcohol.

According to an embodiment, the structuring agent is present in an amount of 0.01% to 10% w/w of the composition. According to an embodiment, the structuring agent is present in an amount of 0.01% to 5% w/w of the composition. According to an embodiment, the structuring agent is present in an amount of 0.01% to 4% w/w of the composition. According to an embodiment, the structuring agent is present in an amount of 0.01% to 3% w/w of the composition. According to an embodiment, the structuring agent is present in an amount of 0.01% to 2% w/w of the composition. According to an embodiment, the structuring agent is present in an amount of 0.01% to 1% w/w of the composition. According to an embodiment, the structuring agent is present in an amount of 0.01% to 0.1% w/w of the composition.

According to an embodiment, the anti-freezing agents or freezing point depressants used in the liquid composition include, but not limited to one or more of polyhydric alcohols such as ethylene glycol, diethylene glycol, dipropylene glycol, propylene glycol, butyrolactone, N,N-dimethyl-formamide, glycerol, monohydric or polyhydric alcohols, glycol ethers, glycol ethers, glycol monoethers such as the methyl, ethyl, propyl and butyl ether of ethylene glycol, diethylene glycol, propylene glycol and dipropylene glycol, glycol diethers such as methyl and ethyl diethers of ethylene glycol, diethylene glycol and dipropyleneglycol.or urea, glycerol, isopropanol, propylene glycol monomethyl ether, di- or tripropylene glycol monomethyl ether or cyclohexanol, carbohydrates such as glucose, mannose, fructose, galactose, sucrose, lactose, maltose, xylose, arabinose, sorbitol, mannitol, trehalose, raffinose or derivatives thereof. However, those skilled in the art will appreciate that it is possible to utilize different anti-freezing agents without departing from the scope of the present invention.

According to an embodiment, the chelating or complexing or sequestering agents which are used in the liquid composition include, but not limited to one or more of polycarboxylic acids such as polyacrylic acid and the various hydrolyzed poly(methyl vinyl ether/maleic anhydride); N-hydroxyethyliminodiacetic acid, nitrilotriacetic acid (NTA), N,N,N',N'-ethylenediaminetetraacetic acid, N-hydroxyethyl-N, N',N'-ethylenediaminetriacetic acid and N,N,N',N",N"-diethylenetriaminepentaacetic acid; α-hydroxy acids, such as citric acid, tartaric acid and gluconic acid; orthophosphates, such as trisodium phosphate, disodium phosphate, monosodium phosphate; condensed phosphates, such as sodium tripolyphosphate, tetrasodium pyrophosphate, sodium hexametaphosphate and sodium tetrapolyphosphate; 5-sulfo-8-hydroxyquinoline; and 3,5-disulfopyrocatechol, polycarboxylates, ethylene diamine tetraacetic acid (EDTA), diethylenetriaminepentaacetic acid (DTPA), N-hydroxyethyl-ethylenediaminetriacetic acid (HEDTA), ethylenediaminediacetate (EDDA), ethylenediaminedi(o-hydroxyphenylacetic) acid (EDDHA), cyclohexane diamine tetraacetic acid (CDTA), polyethyleneaminepolyacetic acids, lignosulfonate, Ca-, K-, Na-, and ammonium lignosulfonates, fulvic acid, ulmic acid, nucleic acids, cyclodextrin, humic acid, pyrophosphate. However, those skilled in the art will appreciate that it is possible to utilize other chelating or complexing or sesquitering agents without departing from the scope of the present invention.

According to an embodiment, the penetrants which are used in the liquid composition include, but not limited to one or more of alcohol, glycol, glycol ether, ester, amine, alkanolamine, amine oxide, quaternary ammonium compound, triglyceride, fatty acid ester, fatty acid ether, N-methyl pyrrolidone, dimethylformamide, dimethylacetamide, or dimethyl sulfoxide, polyoxyethylene trimethylolpropanemonooleate, polyoxyethylene trimethylolpropanedioleate, polyoxyethylenetrimethylolpropanetrioleate, polyoxyethylenesorbitanmonooleate, polyoxyethylene sorbitol hexaoleate. However, those skilled in the art will appreciate that it is possible to utilize different penetrants without departing from the scope of the present invention.

According to an embodiment, the ultraviolet absorbent which are used in the agrochemical composition include, but not limited to one or more of 2-(2'-hydroxy-5'-methylphenyl)benzotriazole, 2-ethoxy-2'-ethyloxazalic acid bisanilide, succinic acid dimethyl-1-(2-hydroxyethyl)-4-hydroxy-2,2,6,6-tetramethylpiperidine polycondensate, benzotriazole compounds such as 2-(2'-hydroxy-5'-methylphenyl)benzotriazole and 2-(2'-hydroxy-4'-n-octoxyphenyl)benzotriazole; benzophenone compounds such as 2-hydroxy-4-methoxybenzophenone and 2-hydroxy-4-n-octoxybenzophenone; salicylic acid compounds such as phenyl salicylate and p-t-butylphenyl salicylate; 2-ethylhexyl 2-cyano-3,3-diphenyl acrylate, 2-ethoxy-2'-ethyl oxalic bisanilide, and dimethyl succinate-1-(2-hydroxyethyl)-4-hydroxy-2,2,6,6-tetramethylpiperidine polycondensate. However, those skilled in the art will appreciate that it is possible to utilize different ultraviolet absorbents, without departing from the scope of the present invention.

According to an embodiment, the UV ray scattering agents which are used in the agrochemical composition include, but not limited to titanium dioxide may be used. However, those skilled in the art will appreciate that it is possible to utilize different UV ray scattering agents or mixtures thereof without departing from the scope of the present invention.

According to an embodiment, the humectants which are used in the agrochemical composition include, but not limited to one or more of polyoxyethylene/polyoxypropylene copolymers, particularly block copolymers, such as the Synperonic PE series of copolymers available from Uniqema or salts, derivatives thereof. Other humectants are propylene glycol, monoethylene glycol, hexylene glycol, butylene glycol, ethylene glycol, diethylene glycol, poly (ethylene glycol), poly (propylene glycol), glycerol; polyhydric alcohol compounds such as propylene glycol ether. Also other humectants include aloe vera gel, alpha hydroxyl acids such as lactic acid, glyceryl triacetate, honey, lithium chloride, etc. The non-ionic surfactants mentioned above also act as humectants. However, those skilled in the art will appreciate that it is possible to utilize other conventionally known humectants without departing from the scope of the present invention.

According to an embodiment, the humectant is present in the range of 0.1% to 90% w/w of the total composition. According to an embodiment, the humectant is present in the range of 0.1% to 70% w/w of the total composition. According to an embodiment, the humectant is present in the range of 0.1% to 60% w/w of the total composition. According to an embodiment, the humectant is present in the range of 0.1% to 50% w/w of the total composition. According to an embodiment, the humectant is present in the range of 0.1% to 30% w/w of the total composition. According to an embodiment, the humectant is present in the range of 0.1% to 10% w/w of the total composition.

According to an embodiment, the organic fluids which are used in agrochemical composition include, but not limited to one or more of aromatic and non-aromatic hydrocarbons, halogenated aromatic and non- aromatic hydrocarbons, aromatic and non-aromatic ethers, esters or amides and oils. According to further embodiment the oils include but not limited to, one or more of a mineral oil, petroleum oil, vegetable oil or animal oil or mixtures thereof. However, those skilled in the art will appreciate that it is possible to utilize other oils without departing from the scope of the present invention.

According to an embodiment, the mineral oil or petroleum oil include, but not limited to one or more of aliphatic or isoparaffinic series and mixtures of aromatic and aliphatic hydrocarbons; halogenated aromatic or aliphatic hydrocarbons. Paraffinic oil includes, but not limited to one or more of linear or branched C8 to C30 paraffins for example such as octane, nonane, decane, undecane, dodecane, tridecane, tetradecane, pentadecane, hexadecane or their mixtures and mixtures thereof with higher boiling homologs, such as hepta-, octa-, nona-decane, eicosane, heneicosane, docosane, tricosane, tetracosane, pentacosane, and the branched chain isomers thereof, unsubstituted or substituted aromatic or cycloaliphatic C7 to C18 hydrocarbon compounds such as mono- or polyalkyl-substituted benzenes, or mono- or polyalkyl-substituted naphthalenes, or transesterification products thereof, liquid esters of C1 to C12 alcohols such as butanol, n-octanol, i-octanol, dodecanoi, cyclopentanol, cyclohexanol, cyclooctanol, ethylene glycol or propylene glycol with C2 to C12 carboxylic or polycarboxylic acids, such as caproic acid, capric acid, caprylic acid, peiargonic acid, succinic acid and glutaric acid; or with aromatic carboxylic acids such as benzoic acid, toluic acid, salicylic acid and phthalic acid , liquid amides of C1 to C5 amines, alkylamines or alkanolamines with C6 to C18 carboxylic acids, or derivatives thereof. Esters which are used in the oil dispersions of the invention include, but not limited to one or more of benzyl acetate, caproic acid ethyl ester, peiargonic acid ethyl ester, benzoic acid methyl or ethyl ester, salicylic acid methyl, propyl, or butyl ester, diesters of phthalic acid with saturated aliphatic or alicyclic C1 to C12 alcohols, such as phthalic acid dimethyl ester, dibutyl ester, diisooctyt ester, or liquid amides of C1-C3 amines, alkylamines or alkanolamines with C6 - C18 carboxylic acids and mixtures thereof. However, those skilled in the art will appreciate that it is possible to utilize other mineral or petroleum oils without departing from the scope of the present invention.

According to an embodiment, the vegetable oils include, but not limited to one or more of seed oil. The vegetable oils include but not limited to, one or more of soy bean oil, rape seed oil, olive oil, castor oil, sunflower seed oil, coconut oil, corn oil, cotton seed oil, linseed oil, palm oil, peanut oil, saffiower oil, sesame oil, kapok oil, papaya oil, camellia oil, rice bran oil, tung oil and the like; and esters of the above vegetable oils, or transesterification products thereof such as soy bean oil methyl esters, ethyl esters, propyl esters, or butyl esters. The animal oils include, but not limited to one or more of whale oil, cod-liver oil, or mink oil. However, those skilled in the art will appreciate that it is possible to utilize other vegetable or animal oils without departing from the scope of the present invention. The inventors have further determined that the composition of the present invention has excellent physical properties of dispersibility, suspensibility, flowability, disintegration, wetting time, viscosity, stability, pourability, provides ease of handling and also reduces the loss of material while handling the product at the time of packaging as well as during field application.

Dispersibility of the water dispersible, micro granular agrochemical composition is a measure of percent dispersion. Dispersibility is calculated by the minimum percent dispersion. Dispersibility is defined as the ability of the granules to disperse upon addition to a liquid such as water or a solvent. To determine dispersibility of the granular composition as per the standard CIPAC test, MT 174, a known amount of the granular composition was added to a defined volume of water and mixed by stirring to form a suspension. After standing for a short period, the top nine-tenths are drawn off and the remaining tenth dried and determined gravimetrically. The method is virtually a shortened test of suspensibility and is appropriate for establishing the ease with which the granular composition dispersed uniformly in water.

According to an embodiment, the agrochemical composition in the form of solid especially water dispersible granules and micro granules exhibits almost instantaneous dispersion thus making the actives readily available to the crops.

According to an embodiment, the agrochemical composition has a dispersibility of at least 30%. According to an embodiment, the agrochemical composition has a dispersibility of at least 40%. According to an embodiment, the agrochemical composition has a dispersibility of at least 50%. According to an embodiment, the agrochemical composition has a dispersibility of at least 60%. According to an embodiment, the agrochemical composition has a dispersibility of at least 70%. According to an embodiment, the agrochemical composition has a dispersibility of at least 80%. According to an embodiment, the agrochemical composition has a dispersibility of at least 90%. According to an embodiment, the agrochemical composition has a dispersibility of at least 99%. According to an embodiment, the agrochemical composition has a dispersibility of 100%.

Disintegration is defined as the complete breakdown exhibited by the granules on coming in contact with soil moisture or water. The Samples can be tested for disintegration time as per the CIPAC Handbook, "MT 197 for Disintegration of tablets". To carry out the test one entire water disintegrable granule is added to a defined volume of CIPAC standard water and mixed by gentle stirring for the specified disintegration time of the tablet. The suspension is then passed through a 2000µm sieve. The absence of a residue on the screen indicates complete disintegration of the tablet.

According to an embodiment, the agrochemical composition in the form of water disintegrable granules or broadcast granules exhibits superior properties of disintegration. According to an embodiment, the disintegration time exhibited by the agrochemical composition is at least 120 minutes. According to an embodiment, the disintegration time exhibited by the agrochemical composition is at least 90 minutes. According to an embodiment, the disintegration time exhibited by the agrochemical composition is at least 70 minutes. According to an embodiment, the disintegration time exhibited by the agrochemical composition is at least 50 minutes. According to an embodiment, the disintegration time exhibited by the agrochemical composition is at least 30 minutes. According to an embodiment, the disintegration time exhibited by the agrochemical composition is at least 20 minutes. According to an embodiment, the disintegration time exhibited by the agrochemical composition is at least 10 minutes. According to an embodiment, the disintegration time exhibited by the agrochemical composition is at least 5 minutes. It is possible that the agrochemical composition of the present invention can be formulated in a manner such that it readily disintegrates and can even disintegrate in less than 5 minutes. The disintegration time is estimated by disintegration testing equipments such as the ones provided by Electrolab Edutec, Arentek and Shimadzu.

According to an embodiment, the agrochemical composition exhibits good suspensibility. Suspensibility is defined as the amount of active ingredient suspended after a given time in a column of liquid, of stated height, expressed as a percentage of the amount of active ingredient in the original suspension. The water dispersible granules can be tested for suspensibility as per the CIPAC Handbook, "MT 184 Test for Suspensibility" whereby a suspension of known concentration of the composition in CIPAC Standard Water was prepared and placed in a prescribed measuring cylinder at a constant temperature, and allowed to remain undisturbed for a specified time. The top 9/10ths were drawn off and the remaining 1/10th was then assayed chemically, gravimetrically, or by solvent extraction, and the suspensibility was calculated.

The suspensibility of the liquid suspension is the amount of active ingredient suspended after a given time in a column of liquid, of stated height, expressed as a percentage of the amount of active ingredient in the original suspension. The suspensibility of liquid suspension concentrate is determined as per CIPAC MT-161 by preparing 250 ml of diluted suspension, allowing it to stand in a measuring cylinder under defined conditions, and removing the top nine-tenths. The remaining tenth is then assayed chemically, gravimetrically or by solvent extraction, and the suspensibility is calculated.

According to an embodiment, the agrochemical composition has a suspensibility of at least 30%. According to an embodiment, the agrochemical composition of at least 40%. According to an embodiment, the agrochemical composition has a suspensibility of at least 50%. According to an embodiment, the agrochemical composition has a suspensibility of at least 60%. According to an embodiment, the agrochemical composition has a suspensibility of at least 70%. According to an embodiment, the agrochemical composition has a suspensibility of at least 80%. According to an embodiment, the agrochemical composition has a suspensibility of at least 90%. According to an embodiment, the agrochemical composition has a suspensibility of at least 99%. According to an embodiment, the agrochemical composition has a suspensibility of 100%.

According to an embodiment, the agrochemical composition demonstrates superior stability towards heat, light, temperature and caking. The composition does not form a hard cake and exhibits enhanced stability even at extended storage under higher temperatures which in turn results in superior field performance. According to further embodiment, the stability exhibited by the agrochemical composition is at least 3 years. According to further embodiment, the stability exhibited by the agrochemical composition is at least 2 years. According to further embodiment, the stability exhibited by the agrochemical composition is at least 1 year. According to further embodiment, the stability exhibited by the agrochemical composition is at least 6 months.

Wettability is the condition or the state of being wettable and can be defined as the degree to which a solid is wetted by a liquid, measured by the force of adhesion between the solid and liquid phases. The wettability of the granular composition is measured using the Standard CIPAC Test MT-53 which describes a procedure for the determination of the time of complete wetting of wettable formulations. A weighed amount of the granular composition is dropped on water in a beaker from a specified height and the time for complete wetting was determined. According to another embodiment, the agrochemical composition in the form of water dispersible granules, micro granules and broadcast granules has wettability of less than 2 minutes. According to another embodiment, the agrochemical composition in the form of water dispersible granules, micro granules and broadcast granules has wettability of less than 1 minute. According to another embodiment, the agrochemical composition in the form of water dispersible granules, micro granules and broadcast! granules has wettability of less than 30 seconds.

According to an embodiment, the agrochemical composition passes the wet sieve retention test. The test is used to determine the amount of non-dispersible material in formulations that are applied as dispersions in water. The wet sieve retention value of the agrochemical composition in the form of liquid suspension and water dispersible granules is measured by using the Standard CIPAC Test MT-185 which describes a procedure for the measuring the amount of material retained on the sieve. A sample of the formulation is dispersed in water and the suspension formed is transferred to a sieve and washed. The amount of the material retained on the sieve is determined by drying and weighing.

According to an embodiment, the agrochemical composition has a wet sieve retention value on a 75 micron sieve of less than 10%. According to an embodiment, the agrochemical composition has a wet sieve retention value on a 75 micron sieve of less than 7%. According to an embodiment, the agrochemical composition has a wet sieve retention value on a 75 micron sieve of less than 5%. According to an embodiment, the agrochemical composition has a wet sieve retention value on a 75 micron sieve of less than 2%.

According to an embodiment, viscosity of the liquid composition is determined as per CIPAC MT-192. A sample is transferred to a standard measuring system. The measurement is carried out under different shear conditions and the apparent viscosities are determined. During the test, the temperature of the liquid is kept constant. According to an embodiment, the agrochemical composition has a viscosity at 25° C. of about 10 cps to about 3000 cps. According to an embodiment, the agrochemical composition has a viscosity at 25° C. of about 10 cps to about 2500 cps. According to an embodiment, the agrochemical composition has a viscosity at 25° C. of about 10 cps to about 2000 cps. According to an embodiment, the agrochemical composition has a viscosity at 25° C. of about 10 cps to about 1500 cps. According to an embodiment, the agrochemical composition has a viscosity at 25° C. of about 10 cps to about 1200 cps. According to an embodiment, the agrochemical composition has viscosity at 25° C. of about 10 cps to about 500 cps. According to an embodiment, the agrochemical composition has a viscosity at 25° C. of about less than 500 cps. According to an embodiment, the agrochemical composition has viscosity at 25° C. of about 10 cps to about 400 cps. According to an embodiment, the agrochemical composition has viscosity at 25° C. of about 10 cps to about 300 cps.

According to an embodiment, the agrochemical composition demonstrates superior stability in terms of suspensibility under accelerated storage condition (ATS). According to an embodiment, the agrochemical composition demonstrates suspensibility of more than 90% under ATS. According to an embodiment, the agrochemical composition demonstrates suspensibility of more than 80% under ATS. According to an embodiment, the agrochemical composition demonstrates suspensibility of more than 70% under ATS. According to an embodiment, the agrochemical composition demonstrates suspensibility of more than 60% under ATS. According to an embodiment, the agrochemical composition demonstrates suspensibility of more than 50% under ATS. According to an embodiment, the agrochemical composition demonstrates suspensibility of more than 40% under ATS. According to an embodiment, the agrochemical composition demonstrates suspensibility of more than 30% under ATS.

According to an embodiment, is a process for preparing the agrochemical composition comprising a complex formed with at least one zinc salt and at least one of eugenol or a source thereof; and at least one agrochemical excipient.

According to an embodiment, the process for preparing the agrochemical composition further includes at least one of nutrient, biostimulants, pesticidal actives, plant growth regulators, microbes, algae, bacteriospores, fertilizers or salts or complexes or derivatives or mixtures thereof.

According to further embodiment, the complex formed with at least one zinc salt and at least one of eugenol or a source thereof; as per the invention may be prepared as outlined below. Briefly one of the complex formation technique; wherein zinc is in the form of zinc oxide involves reacting one mole of zinc oxide to 2 moles of eugenol in presence of one or more of accelerator or plasticizer such as zinc stearate, zinc acetate; wherein the ratio of zinc oxide to eugenol is 19:79. Alternatively, the process may be varied by keeping the ratio of zinc oxide to eugenol is 44:55. However, those skilled in the art will appreciate that it is possible to utilize other techniques without departing from the scope of the present invention.

According to further embodiment, is a process for preparing the agrochemical composition, wherein the composition is in the form of suspoemulsion, emulsion in water, oil dispersion or suspension, water dispersible granules, broadcast granules, water disintegrable granules, micro granules, liquid suspension, aqueous suspension, suspension concentrate, wettable powder, emulsifiable concentrate and seed dressing or emulsions for seed treatment and combinations thereof.

The agrochemical composition of the present invention is made by various means depending on the nature of the formulation to which the present invention relates.

According to another embodiment, is a process for preparing the solid agrochemical composition in the form of water dispersible granules, broadcast granules, water disintegrable granules, micro granules, wettable powder.

According to another embodiment, the agrochemical composition in the form of water dispersible granules, broadcast granules, water disintegrable granules, micro granules is made by various techniques such as spray drying, fluidized bed granulation, pan granulation, extrusion, freeze drying etc.

According to an embodiment, the process of preparing a water dispersible granular or micro granular composition involves milling a blend of a complex formed with at least one zinc salt and at least one of eugenol or a source thereof; with at least one agrochemical excipient to obtain slurry or a wet mix. The wet mix obtained is then dried, for instance in a spray dryer, fluid bed dryer or any suitable granulating equipment, followed by sieving to remove the undersized and oversized granules to obtain water dispersible granules or microgranules of the desired size if required. However, those skilled in the art will appreciate that it is possible to modify or alter or change the process or process parameters to obtain water dispersible granular or micro granular composition without departing from the scope of the present invention.

According to another embodiment, the agrochemical composition in the form of water dispersible granules or micro granules is also made by dry milling a complex formed with at least one zinc salt and at least one of eugenol or a source thereof; and at least one agrochemical excipient in an air mill or a jet mill to obtain the desired particle size in the range of 0.1 to 50 microns. Water is added to the dry powder and the mixture is blended to obtain a dough or paste, which is then extruded through an extruder to obtain the granules of desired size. The granules can also be formed with low melt extrusion. However, those skilled in the art will appreciate that it is possible to modify or alter or change the process or process parameters to obtain water dispersible granular or micro granular composition without departing from the scope of the present invention.

Disclosed but not claimed, the process of preparing a wettable powder composition involves milling a blend of a complex formed with at least one zinc salt and at least one of eugenol or a source thereof; with at least one agrochemical excipient to obtain wettable powder composition with desired particle size. Further, broadcast granules, water disintegrable granules can be made by various processes such as pelletization, compaction, agglomeration or other techniques known in the art. However, those skilled in the art will appreciate that it is possible to modify or alter or change the process or process parameters to obtain wettable powder, broadcast granular, water disintegrable granular composition without departing from the scope of the present invention.

Disclosed but not claimed is a process for preparing the liquid agrochemical composition in the form of suspoemulsion, emulsion in water, oil dispersion or suspension, liquid suspension, aqueous suspension, suspension concentrate, emulsifiable concentrate and seed dressing or emulsions for seed treatment and combinations thereof.

The process of preparing the liquid suspension, aqueous suspension, suspension concentrate involves homogenization of one or more of excipients by feeding them into a vessel provided with stirring facilities. The complex formed with at least one zinc salt and at least one of eugenol or a source thereof; are added to the homogenized blend and stirred continuously for about 5 to 10 minutes until the total mixture becomes homogeneous. Subsequently, the suspension obtained is passed through the wet mill to obtain a desired particle size in the range of 0.1 to 50 microns. Then, requisite quantity of the structuring agent is added to the obtained suspension, under continuous homogenization. However, those skilled in the art will appreciate that it is possible to modify or alter or change the process or process parameters to obtain liquid suspension, aqueous suspension, suspension concentrate composition without departing from the scope of the present invention.

The liquid suspension, aqueous suspension, suspension concentrate composition can be further mixed with aqueous emulsion containing at least one fertilizer, nutrients, pesticidal actives, biostimulants, plant growth regulators, algae, microbes, bacteriospores, salts, derivatives, complexes or mixtures thereof in presence of at least one agrochemical excipient; to obtain suspoemulsion composition of desired size. However, those skilled in the art will appreciate that it is possible to modify or alter or change the process or process parameters to obtain suspoemulsion composition.

A gel composition is prepared by adding more amounts of viscosity modifiers to the suspension concentrate composition. However, those skilled in the art will appreciate that it is possible to modify or alter or change the process or process parameters to obtain gel composition.

Disclosed but not claimed is a process of preparation of the agrochemical composition in the form of oil dispersion. The process involves mixing an oil, a complex formed with at least one zinc salt and at least one of eugenol or a source thereof; one or more of emulsifier or surfactant and optionally one or more other agrochemical excipients such as rheology modifiers under high shear, thereby grinding the sample to desired particle size to obtain the oil dispersion composition. However, those skilled in the art will appreciate that it is possible to modify or alter or change the process or process parameters to obtain oil dispersion composition without departing from the scope of the present invention.

According to an embodiment, the composition of the present invention is at least one of a pesticide composition, a nutrient composition, a crop strengthener composition, a crop protection, a yield enhancer composition, a fungicide composition, a bactericide composition and a fertilizer composition.

According to an embodiment, the invention further relates to a method of protecting the crop, improving the crop health and growth, enhancing the crop yield, strengthening the plant, increasing crop defense, protecting crops from biotic and abiotic stresses or conditioning the soil; the method comprising treating at least one of seeds, seedling, crops, a plant, plant propagation material, locus, parts thereof or to the surrounding soil with effective amount of the agrochemical composition which includes a complex formed with at least one zinc salt and at least one of eugenol or a source thereof; with at least one agrochemical excipient.

The composition is applied through a variety of methods. Methods of applying to the soil include any suitable method, which ensures that the composition penetrates the soil, for example nursery tray application, in furrow application, soil drenching, soil injection, drip irrigation, sprinker irrigation, seed treatment, seed painting and such other methods. The composition also is applied in the form of a foliar spray.

The rates of application or the dosage of the composition depends on the type of use, the type of crops, or the specific active ingredients in the composition but is such that the agrochemical active ingredient, in an effective amount to provide the desired action.

According to an embodiment, the composition of the present invention is effective in controlling growth of plant pathogens such as bacteria, fungi, nematodes, protists, virus as well as pests such as insects, acarids, and the like.

### A. PREPARATION EXAMPLES:

The following examples illustrate the basic methodology and versatility of the composition of the invention. Sources of zinc, eugenol are exemplified in the preparatory examples and can be replaced by any other sources of zinc, eugenol. It should be noted that this invention is not limited to these exemplifications and can be extrapolated to overall claimed concentration range of the components.

### A. Solid Agrochemical composition of a complex containing zinc and eugenol.

Example 1: Water dispersible granular composition comprising 40% complex formed using zinc oxide and eugenol: Water dispersible granular composition was prepared by blending 40 parts of a complex, 30 parts of naphthalene sulphonate condensate, 20 parts of sodium lingo sulfonate, 10 parts of kaolin to obtain a blend. The blend obtained was milled to get a powder of less than 50 microns particle size. The powder was mixed with water in a suitable mixing equipment to form a slurry or wet mix.

The slurry obtained was wet ground in suitable wet grinding equipment. The wet milled slurry obtained was spray dried at an inlet temperature less than 140°C and outlet temperature less than 90°C to get a granular powder. The composition had the following particle size distribution: D10 less than 2.5 microns; D50 less than 6.5 microns and D90 less than 18.1 microns. The granule size of the composition was in the range of 0.1-2.5 mm. The composition had a dispersibility of 70%, suspensibility of 75%, wet sieve retention value of 1.5%, wettability of less than 28 sec. The composition further demonstrated suspensibility of about 69% under accelerated storage condition.

Example 2: Micro Granular composition comprising 80% complex formed using zinc oxide and clove oil: This composition was prepared similar to Example 1 using 80 parts of complex, 11 parts of naphthalene sulfonic acid, 6 parts of starch and 3 parts of silica. The composition had the following particle size distribution: D10 less than 1.8 micron; D50 less than 5.2 microns and D90 less than 16.5 microns.

The granule size of the composition was in the range of 0.1-1.5 mm. The composition had a dispersibility of 96%, suspensibility of 91%, wet sieve retention value of 0.3% and wettability of less than 40 sec. The composition further demonstrated suspensibility of about 85% under accelerated storage condition.

Example 3: Broadcast Granular composition of 65% complex formed using zinc carbonate and combination of clove, cinnamon oil: This composition was prepared using 65 parts of complex, 12 parts of sodium naphthalene formaldehyde condensate, 10 parts of kaolin, 13 parts of cross linked carboxymethyl cellulose. The composition had the following particle size distribution: D10 less than 3.5 microns; D50 less than 6.8 microns and D90 less than 20 microns. The granule size of the composition was in the range of 0.1-5 mm. The composition had a disintegration time of 10 minutes, wettability of less than 45 sec.

### B. Liquid Agrochemical composition of a complex containing zinc and eugenol.

Example 4: Liquid Suspension composition of 50% complex formed using zinc oxide and eugenol: Liquid suspension composition was prepared by mixing 50 parts of complex, 6 parts of naphthalene sulfonate condensate, 5 parts of propylene glycol, 37 parts of water and homogenised by feeding them into a vessel provided with stirring facilities until the total mixture was homogeneous. Subsequently, the suspension obtained was passed through the wet mill to obtain a suspension with a particle size of 0.1 to 50 microns. Then, 2 part of gum arabic (3%) was added under continuous homogenization to obtain the suspension concentrate. The composition had the particle size distribution of about D10 less than 2 microns; D50 less than 3.8 microns and D90 less than 8.5 microns. The sample had suspensibility of about 80%, viscosity of about 850 cps. The composition had suspensibility of about 75% under accelerated storage condition.

Example 5: Liquid Suspension composition of 25% complex formed using elemental zinc and clove oil: This composition was prepared similar to Example 6 using 25 parts of complex, 16 parts of naphthalene sulphonate condensate, 5 parts of glycerol monolaurate, 14 parts of polyethylene glycol, 4 parts of 3% solution of gum Arabic and 36 parts of water. The composition had the particle size distribution of about D10 less than 3.0 microns; D50 less than 4.8 microns and D90 less than 10 microns. The sample had suspensibility of about 96%, viscosity of about 480 cps. The composition had suspensibility of about 92% under accelerated storage condition.

Example 6: Suspoemulsion composition of 40% complex formed using zinc carbonate and combination of clove oil, pepper oil: The liquid suspension composition was prepared using 40 parts of complex, 4 parts of sodium alkyl benzene sulfonate, 2 parts of sodium salt of polycarboxylic acid, 2 parts of perlite and 30 parts of water. The said composition was blended with emulsifiable concentrate composition prepared by using 15% pyraclostrobin in 7% petroleum solvent to obtain suspoemulsion formulation. The composition had the following particle size distribution: D10 less than 2.0 microns; D50 less than 5 microns and D90 less than 12 microns. The sample had suspensibility of about 91%, viscosity of about 600 cps. The composition had suspensibility of about 86% under accelerated storage condition.

Example 7: Oil Dispersion composition of 10% complex made using zinc oxide and eugenol: The oil dispersion composition was obtained by heating 82 parts of methyl Soyate, 1% silica at 80°-85°C. The resultant mixture was cooled, blended with 10 parts of complex, 6 parts of EO/PO Block Co-Polymer and homogenised by feeding them into a vessel provided with stirring facilities until the total mixture was homogeneous. Subsequently, the suspension obtained was passed twice through the wet mill. Then, 1 part of silica was added under continuous homogenization to obtain an oil dispersion composition with particle size less than 35 microns. The sample had suspensibility of about 76%, viscosity of about 800 cps. The composition had suspensibility of about 71% under accelerated storage condition.

### FIELD STUDY:

To study effect of agrochemical composition of a complex according to an embodiment of the present invention:
Experiment No. 1: Lab Trial (in-vivo anti-fungal test) was conducted for the evaluation of an efficacy of the composition of the present invention on strains of various fungal pathogens such as *Rhizoctonia spps.* causing root rot disease, *Fusarium oxysporum* causing wilt disease, *Aspergillus niger* causing collar rot disease, *Colletorichium spps* causing anthracnose disease, *Sclerotium rolfsii* causing stem rot disease at different concentrations of the composition.

The treatments (T1 and T2) with the compositions of the present invention as mentioned below were screened by the "Agar Plate Assay method" at concentrations of 1000 ppm, 2000 ppm and 5000 ppm respectively against the fungi pathogens as mentioned above. The observations on average colony diameter of fungal pathogen were recorded and presented in Table 1 in form of % inhibition of the mycelial growth.

**Table 1: Evaluation of the composition of present embodiment against pathogenic fungi in vitro.**

| | | | | | | |
|---|---|---|---|---|---|---|
| T1: 25% SC composition of complex as per the embodiment of the present invention; | | | | | | |
| T2: 40% WDG composition of complex as per the embodiment of the present invention; | | | | | | |
| | | | | | | % Inhibition of mycelial growth of different pathogenic fungi |

| Concentrations of active ingredient (a.i.) | | *Rhizocto nia solani* | *Fusariu m oxysporu m* | *Aspergillu s niger* | *Colletoric hium spps* | *Sclerotium rolfsii* |
|---|---|---|---|---|---|---|
| T1 | 1000 ppm | 60.7 | 77.0 | 30.3 | 52.7 | 68.3 |
| | 2000 ppm | 100.0 | 100.0 | 87.3 | 95.7 | 100.0 |
| | 5000 ppm | 100.0 | 100.0 | 100.0 | 100.0 | 100.0 |
| T2 | 1000 ppm | 53.7 | 44.0 | 51.3 | 80.3 | 56.7 |
| | 2000 ppm | 100.0 | 87.3 | 92.0 | 100.0 | 100.0 |
| | 5000 ppm | 100.0 | 100.0 | 100.0 | 100.0 | 100.0 |

It was noted that treatments T1 and T2 according to an embodiment of the present invention appear as effective treatments to control the pathogen *Rhizoctonia* spps.

It can be seen from Table 1 that the % growth control with T1 and T2 according to an embodiment of the present invention at an active ingredient concentration of 1000 ppm was about 60.7% and 53.7% respectively whereas at a concentration of 2000 ppm, 5000 ppm, it was about 100% for both the treatments. Thus, the composition of the complex in the form of water dispersible granules and suspension concentrate illustrates excellent effect against tested fungus at a dosage of 2000 ppm and 5000 ppm. Further, it was observed that the compositions of the present invention T1, T2 show incremental efficacy when tested from 1000 to 5000 ppm of the active ingredient complex.

Similarly, as can be seen from the Table 1, the composition of the present invention was found to be efficacious in controlling the other tested fungus.

Experiment No. 2: To assess the effect of composition of complex of the present invention against Citrus Canker disease (a bacterial disease) on Lemon.

Evaluation of efficacy of agrochemical composition of the present invention in the form of water dispersible granules as well as suspension concentrate against Citrus Canker disease in Lemon was done at Akola in Maharashtra

### Field Experiment Methodology:

The trial was laid out during kharif season in Randomized Block Design (RBD) for treatments as described below including untreated control, replicated three times.
Example-1: 25% SC composition of Complex as per the embodiment of the present invention;
Example-2: 40% WDG composition of Complex as per the embodiment of the present invention

For each treatment, three plants were tagged and replicated thrice. The treatments as per treatment details mentioned below were applied as foliar spray twice at the interval of 15 days between two sprays. First spray was started immediately after occurrence of initial disease symptoms on plant leaves and fruits. Twenty infected leaves and fruit selected randomly were tagged and labeled just before application of treatment in each plot/plants.

### Details of experiment

| | |
|---|---|
| a) Trial Location : | Akola (Maharashtra) |
| b) Crop : | Citrus |
| c) Experiment season : | Rabi 2018-19 (July to October) |
| d) Trial Design : | Randomized Block Design |
| e) Replications : | Three |
| f) Treatment : | Seven |
| g) No of plant /treat. : | Three |
| h) Date of Applications: | 1^{st} =29.07.2018; 2^{nd} = 14.08.2018 |
| j) Method of application: | Foliar spray using 5 L water per plant |

The progress of the disease on both leaves and fruits was recorded 20 days after 2nd spray using 0-5 rating scale and calculated percent disease control over untreated plot is presented in Table 2. The fruit yield data was also recorded from each picking and total yield from each plot was presented in Table 2. The percent disease control was calculated using following formula. Disease Control (%) = [Plant mortality in control plant - Plant mortality in treated plant) / Plant Mortality in control plant] X 100

**Table 2: Effect of composition of complex of the present invention against citrus canker disease on Lemon.**

| Treatments | Dose (g.a.i./L water) | % Disease control | | Marketable Fruit yield (kg/plant) |
|---|---|---|---|---|
| | | Leaves | Fruits | |
| T1-Example-1 | 0.5 | 22.3 | 17.8 | 18.3 |
| T2-Example-1 | 1.0 | 55.7 | 35.3 | 19.8 |
| T3-Example-1 | 2.0 | 80.4 | 63.1 | 22.1 |
| T4-Example-2 | 0.5 | 31.5 | 21.9 | 17.9 |
| T 5-Example-2 | 1.0 | 49.6 | 44.3 | 20.1 |
| T6-Example-2 | 2.0 | 88.3 | 69.4 | 22.3 |
| T7-Untreated check | - | 0.0 | 0.0 | 15.3 |

From the data represented in Table 2, it was observed that treatment T3, according to an embodiment of the present invention shows 80.4% and 63.1% disease control in leaves and fruits respectively when compared with untreated control. Similarly, treatment T6 according to an embodiment of the present invention shows 88.3% and 69.4% diseases control in leaves and fruits respectively when compared with untreated control, thus illustrating the highly efficacious nature of the compositions of the present invention in terms of controlling bacterial disease.

The % disease control was superior at a dosage of 2 grams of active ingredient per liter of water (as can be seen from T3 and T6), followed by % disease control at a dosage of 1 gram of active ingredient per liter of water (as can be seen from T2 and T5).

Further, it was also noticed that the compositions of the present invention at different concentrations in the form of water dispersible granules and suspension concentrates depict significantly higher yields as compared to the untreated control in lemon crop. For instance, T1-T6 as per the embodiment of the present invention depicted fruit yield in range of about 17.9 kg/plant to 22.3 kg/plant whereas with treatment T7 (untreated) the fruit yield was 15.3kg/plant.

Thus, it has been observed that the compositions of the present invention, demonstrate enhanced, efficacious and superior results in the fields.

Further, it was observed that addition of other nutrients, pesticides, bio stimulants, plant growth regulators, microbes, algae, bactereospores, fertilizer to the composition of the present invention, apart from improving pesticidal activity may further enhance crop characteristics, crop yield and add to nutritional value of the crop.

The present invention can also be used to improve crop qualities such as good plant growth, biotic and abiotic stress management, support in nutrient uptake by plant, manage the root and shoot growth, increase branching, flowering, prevent flower and fruit shedding etc. and other advantages familiar to a person skilled in the art. It was thus noted that the composition of the present invention helps to improve not only quantitative characteristic of the crop such as yield but also the qualitative parameters such as number of tillers, panicle length etc. as compared to untreated control.

Also, the compositions of the present invention are suitable for drip irrigation or sprinkler irrigation in addition to other methods of applications of the agricultural compositions. The composition is highly safe to the user and to the environment.

## Claims

1. An agrochemical composition comprising:
i. a complex formed with:
a. at least one zinc salt,
b. at least one of eugenol or a source thereof; and
ii. at least one agrochemical excipient; wherein the composition comprises particles in the size range of from 0.1 micron to 50 microns;
wherein the composition is in the form of a solid or a liquid, wherein
the solid composition is in the form of water dispersible granules, broadcast granules, water disintegrable granules, wettable powder or micro granules; and
wherein the water dispersible granules, water disintegrable granules, broadcast granules are in the size range of from 0.1 to 6 mm; and the micro granules are in the size range of from 0.1 to 2.5 mm; and
wherein the liquid composition is in the form of an oil dispersion, an aqueous suspension, or a suspoemulsion; and
wherein the agrochemical excipient comprises a surfactant.

2. The agrochemical composition as claimed in claim 1, wherein the complex is present in a concentration range of from 1-95% w/w of the total composition, preferably in the range of from 5- 95% w/w of the total composition.

3. The agrochemical composition as claimed in claim 1, wherein the zinc salt comprises one or more of water soluble zinc salts, water insoluble zinc salts and mixtures thereof.

4. The agrochemical composition as claimed in claim 3, wherein the water insoluble zinc salt comprises one or more of zinc oxide, zinc carbonate, zinc hydroxides, zinc stearate and mixtures thereof.

5. The agrochemical composition as claimed in claim 3, wherein the water soluble zinc salt comprises one or more of zinc acetate, zinc chloride, zinc nitrate, zinc sulfate, zinc bromide, sodium zincate, zinc iodide and mixtures thereof.

6. The agrochemical composition as claimed in claim 1, wherein the source of eugenol is one or more of essential oil, plant extract and mixtures thereof.

7. The agrochemical composition as claimed in claim 1, wherein the composition further comprises at least one of nutrients selected from macronutrients, micro nutrients; bio stimulants; pesticidal actives; plant growth regulators; microbes; algae; bactereospores; fertilizer selected from nitrogen fertilizer, phosphorous, potassium fertilizers, sulfur fertilizers; salts or complexes and mixtures thereof.

8. The agrochemical composition as claimed in claim 1, wherein the agrochemically acceptable excipient is further selected from one or more of fillers or carriers or diluents, spreading agents, colorants, binders, buffers or pH adjusters or neutralizing agents, antifoaming agents or defoamers, antisettling agents, water miscible solvents, penetrants, preservatives, ultraviolet absorbents, UV ray scattering agents, stabilizers, dispersing agents, emulsifiers, wetting agents structuring agents, disintegrating agents, thickeners, chelating or complexing or sequestering agents, viscosity modifiers, tackifiers, suspension aid, rheology modifiers, humectants, antifreezing agent, sticking agents and mixtures thereof.

9. The agrochemical composition as claimed in claim 1, wherein the composition is at least one of a crop protection composition, a pesticide composition, a fungicide composition, a bactericide composition, a fertilizer composition, a nutrient composition, a crop strengthener composition.

10. The agrochemical composition as claimed in claim 1, wherein the surfactant is present in an amount from 0.1% to 60% w/w of the composition.

11. The agrochemical composition as claimed in claim 1, wherein the liquid composition further comprises a structuring agent.

12. The agrochemical composition as claimed in claim 11, wherein the structuring agent is present in an amount from 0.01% to 10% w/w of the composition.

13. Use of the composition of claim 1 for application to soil or foliar or seeds.

14. A method of protecting the crop, improving its health and growth or enhancing the crop yield, the said method comprising treating at least one of a plant, crop, plant propagation material, locus or parts thereof or seed, seedling or surrounding soil with the composition as claimed in claim 1.

## Patentansprüche

1. Agrochemische Zusammensetzung, umfassend:
i. einen Komplex, gebildet aus:
a. zumindest einem Zinksalz,
b. zumindest einem von Eugenol oder einer Quelle davon; und
ii. zumindest einem agrarchemischen Hilfsstoff; wobei die Zusammensetzung Partikel in einer Größe von 0,1 Mikrometer bis 50 Mikrometer umfasst;
wobei die Zusammensetzung in Form eines Feststoffs oder einer Flüssigkeit vorliegt, wobei
die feste Zusammensetzung in Form von wasserdispergierbaren Granulaten, Broadcast-Granulaten, wasserzersetzbaren Granulaten, benetzbaren Pulvern oder Mikrogranulaten vorliegt; und
wobei die wasserdispergierbaren Granulate, die wasserzersetzbaren Granulate und die Broadcast-Granulate in einem Größenbereich von 0,1 bis 6 mm liegen; und die Mikrogranulate in einem Größenbereich von 0,1 bis 2,5 mm liegen; und
wobei die flüssige Zusammensetzung in Form einer Öldispersion, einer wässrigen Suspension oder einer Suspoemulsion vorliegt; und
wobei der agrochemische Hilfsstoff ein Tensid umfasst.

2. Agrochemische Zusammensetzung nach Anspruch 1, wobei der Komplex in einem Konzentrationsbereich von 1-95 Gew.-% der Gesamtzusammensetzung, vorzugsweise in einem Bereich von 5-95 Gew.-% der Gesamtzusammensetzung, vorliegt.

3. Agrochemische Zusammensetzung nach Anspruch 1, wobei das Zinksalz eines oder mehrere wasserlösliche Zinksalze, wasserunlösliche Zinksalze und Gemische davon umfasst.

4. Agrochemische Zusammensetzung nach Anspruch 3, wobei das wasserunlösliche Zinksalz eines oder mehrere von Zinkoxid, Zinkcarbonat, Zinkhydroxiden, Zinkstearat und Gemischen davon umfasst.

5. Agrochemische Zusammensetzung nach Anspruch 3, wobei das wasserlösliche Zinksalz eines oder mehrere von Zinkacetat, Zinkchlorid, Zinknitrat, Zinksulfat, Zinkbromid, Natriumzinkat, Zinkiodid und Gemischen davon umfasst.

6. Agrochemische Zusammensetzung nach Anspruch 1, wobei die Eugenolquelle eines oder mehrere von ätherischem Öl, Pflanzenextrakt und Gemischen davon ist.

7. Agrochemische Zusammensetzung nach Anspruch 1, wobei die Zusammensetzung ferner zumindest einen Nährstoff umfasst, der ausgewählt ist aus Makronährstoffen, Mikronährstoffen, Biostimulanzien, Pestizidwirkstoffen, Pflanzenwachstumsregulatoren, Mikroben, Algen, Bakteriosporen, Düngemitteln, die ausgewählt sind aus Stickstoffdüngern, Phosphor-, Kalium- und Schwefeldüngern, Salzen oder Komplexen und Gemischen davon.

8. Agrochemische Zusammensetzung nach Anspruch 1, wobei der agrochemisch annehmbare Hilfsstoff ferner ausgewählt ist aus einem oder mehreren von Füllstoffen oder Trägern oder Verdünnungsmitteln, Ausbreitungsmitteln, Farbstoffen, Bindemitteln, Puffern oder pH-Einstellern oder Neutralisierungsmitteln, Antischaummitteln oder Entschäumern, Antisetzmitteln, wassermischbaren Lösungsmitteln, Penetrationsmitteln, Konservierungsmitteln, UV-Absorptionsmitteln, UV-Streuungsmitteln, Stabilisatoren, Dispergiermitteln, Emulgatoren, Benetzungsmitteln, Strukturierungsmitteln, Desintegrationsmitteln, Verdickungsmitteln, Chelat- oder Komplexierungs- oder Sequestriermitteln, Viskositätsmodifikatoren, Klebrigmachern, Suspendierhilfsmitteln, Rheologiemodifikatoren, Feuchthaltemitteln, Gefrierschutzmitteln, Haftmitteln und Gemischen davon.

9. Agrochemische Zusammensetzung nach Anspruch 1, wobei die Zusammensetzung zumindest eine von einer Pflanzenschutzzusammensetzung, einer Pestizidzusammensetzung, einer Fungizidzusammensetzung, einer Bakterizidzusammensetzung, einer Düngemittelzusammensetzung, einer Nährstoffzusammensetzung, einer Pflanzenstärkungszusammensetzung ist.

10. Agrochemische Zusammensetzung nach Anspruch 1, wobei das Tensid in einer Menge von 0,1 Gew.-% bis 60 Gew.-% der Zusammensetzung vorliegt.

11. Agrochemische Zusammensetzung nach Anspruch 1, wobei die flüssige Zusammensetzung ferner ein Strukturierungsmittel umfasst.

12. Agrochemische Zusammensetzung nach Anspruch 11, wobei das Strukturierungsmittel in einer Menge von 0,01 Gew.-% bis 10 Gew.-% der Zusammensetzung vorliegt.

13. Verwendung der Zusammensetzung von Anspruch 1 zur Anwendung auf Boden, Blätter oder Samen.

14. Verfahren zum Schutz der Nutzpflanze, zur Verbesserung ihrer Gesundheit und ihres Wachstums oder zur Steigerung des Ernteertrags, wobei das Verfahren das Behandeln von zumindest einem von einer Pflanze, einer Nutzpflanze, einem Pflanzenvermehrungsmaterial, einem Locus oder Teilen davon oder von Saatgut, Sämling oder umgebendem Boden mit der Zusammensetzung nach Anspruch 1 umfasst.

## Revendications

1. Composition agrochimique comprenant :
i. un complexe formé avec :
a. au moins un sel de zinc,
b. au moins un eugénol ou d'une source de celui-ci ; et
ii. au moins un excipient agrochimique ; dans lequel la composition comprend des particules dans la plage de taille allant de 0,1 micron à 50 microns ;
dans lequel la composition est sous la forme d'un solide ou d'un liquide, dans lequel
la composition solide est sous la forme de granules dispersibles dans l'eau, de granules diffusés, de granules désintégrables dans l'eau, de poudre mouillable ou de microgranules ; et
dans lequel les granules dispersibles dans l'eau, les granules désintégrables dans l'eau, les granules de diffusion sont dans la plage de taille de 0,1 à 6 mm ; et les microgranules sont dans la plage de taille de 0,1 à 2,5 mm ; et
dans lequel la composition liquide se présente sous la forme d'une dispersion d'huile, d'une suspension aqueuse ou d'une suspoémulsion ; et
dans lequel l'excipient agrochimique comprend un tensioactif.

2. Composition agrochimique selon la revendication 1, dans laquelle le complexe est présent dans une plage de concentration de 1 à 95 % en poids de la composition totale, de préférence dans la plage de 5 à 95 % en poids de la composition totale.

3. Composition agrochimique selon la revendication 1, dans laquelle le sel de zinc comprend un ou plusieurs sels de zinc solubles dans l'eau, sels de zinc insolubles dans l'eau et mélanges de ceux-ci.

4. Composition agrochimique selon la revendication 3, dans laquelle le sel de zinc insoluble dans l'eau comprend un ou plusieurs éléments parmi l'oxyde de zinc, le carbonate de zinc, les hydroxydes de zinc, le stéarate de zinc et leurs mélanges.

5. Composition agrochimique selon la revendication 3, dans laquelle le sel de zinc soluble dans l'eau comprend un ou plusieurs éléments parmi l'acétate de zinc, le chlorure de zinc, le nitrate de zinc, le sulfate de zinc, le bromure de zinc, le zincate de sodium, l'iodure de zinc et des mélanges de ceux-ci.

6. Composition agrochimique selon la revendication 1, dans laquelle la source d'eugénol est une ou plusieurs parmi une huile essentielle, un extrait végétal et des mélanges de ceux-ci .

7. Composition agrochimique selon la revendication 1, dans laquelle la composition comprend en outre au moins l'un des éléments nutritifs choisis parmi les macronutriments, les micronutriments, les biostimulants, les actifs pesticides, les régulateurs de croissance des plantes, les microbes, les algues, les bactériospores, les engrais choisis parmi les engrais azotés, les engrais phosphorés, les engrais potassins, les engrais soufrés, les sels ou leurs mélanges

8. Composition agrochimique selon la revendication 1, dans lequel l'excipient acceptable sur le plan agrochimique est en outre choisi parmi une ou plusieurs charges ou véhicules ou diluants, agents d'étalement, colorants, liants, tampons ou régulateurs de pH ou agents neutralisants, agents antimousse ou démoussants, agents anti-sédimentation, solvants miscibles à l'eau, pénétrants, conservateurs, absorbants d'ultraviolets, agents diffusant les rayons UV, stabilisateurs, agents de dispersion, émulsifiants, agents mouillants, agents structurants, agents de désintégration, épaississants, agents chélateur ou complexant ou séquestrant, modificateurs de viscosité, agents collants, aide à la suspension, modificateurs de rhéologie, humectants, agent antigel, agents adhésifs et leurs mélanges.

9. Composition agrochimique selon la revendication 1, dans laquelle la composition est au moins l'une d'une composition phytosanitaire, d'une composition pesticide, d'une composition fongicide, d'une composition bactéricide, d'une composition d'engrais, d'une composition nutritive, d'une composition de renforcement des cultures.

10. Composition agrochimique selon la revendication 1, dans laquelle le tensioactif est présent en une quantité de 0,1 % à 60 % en poids/poids de la composition.

11. Composition agrochimique selon la revendication 1, dans laquelle la composition liquide comprend en outre un agent structurant.

12. Composition agrochimique selon la revendication 11, dans laquelle l'agent structurant est présent en une quantité de 0,01 % à 10 % en poids/poids de la composition.

13. Utilisation de la composition selon la revendication 1 pour une application à un sol ou à des feuilles ou des graines.

14. Procédé pour améliorer la santé ou le rendement de plantes, ledit procédé comprenant le traitement d'au moins l'un parmi une plante, un matériau végétal de multiplication, un point ou des parties de ceux-ci, une semence, un planton ou un sol environnant avec la composition selon la revendication 1.
